# EUROPEAN PATENT APPLICATION

(11) **EP 4 753 353 A1**
(43) Date of publication of application: **03.06.2026**
(21) Application number: 24844663.5
(22) Date of filing: 16.07.2024
(51) Int. Cl.: H04W 72/542

(54) **METHOD AND DEVICE FOR COMMUNICATION NODE USED FOR WIRELESS COMMUNICATION**

(30) Priority: 24.07.2023 CN 202310921769; 10.08.2023 CN 202311009634
(71) Applicant: Apogee 5G Global, LLC, Plano, TX 75024 (US)
(72) Inventor: YU, Qiaoling, Shanghai 201206 (CN); ZHANG, Xiaobo, Shanghai 201206 (CN)
(74) Representative: Gunzelmann, Rainer
(86) International application number: PCT/CN2024/105644
(87) International publication number: WO 2025/020971

(57) **Abstract**

The present application discloses a method and device for a communication node used for wireless communication. The method comprises: a communication node receiving a first message, wherein the first message comprises at least one parameter list, any parameter list among the at least one parameter list comprises a plurality of parameters, and the parameters indicate at least one RS resource; determining a first parameter, wherein the first parameter is one parameter in a first parameter list, and the first parameter list is one parameter list among the at least one parameter list; and applying spatial filtering of the RS resource indicated by the first parameter to wireless transmission, wherein the determination of the first parameter depends on at least the measurement for the RS resource indicated by the first parameter and the position of the first parameter in the first parameter list. The solution provided by the present application facilitates the determination of more suitable spatial filtering.

## Description

### Technical Field

The present application relates to a transmission method and device in a wireless communication system, and in particular to a configuration method and device for RS resources.

### Background Art

With the continuous development of wireless communication, the requirements for mobility, transmission delay, and system capacity have become increasingly stringent. The 3rd Generation Partnership Project (3GPP) Radio Access Network (RAN) #94e meeting decides to study Layer 1 (L1)/Layer 2 (L2) Triggered Mobility (LTM) in a "New Radio (NR) Further NR Mobility Enhancements" work item (WI).

In NR Release (R) 18, Artificial Intelligence (AI)- or Machine Learning (ML)-based Channel State Information (CSI) compression is initiated as a project, and considering the advantages of AI or ML, applying AI or ML to mobility has become an important evolution direction for 3GPP in R19.

### Summary of the Invention

In traditional solutions, a spatial filter of a Reference Signal (RS) resource applied by User Equipment (UE) to wireless transmission is based on a measurement for the RS resource or a measurement report for the RS resource; and through research, the applicant has found that the existing solutions have a problem of application delay or frequent selection in the spatial filter.

In view of the above problem, the present application provides a solution. In the description of the above problem, an NR system is used as an example. The present application is also applicable to scenarios such as a Long-Term Evolution (LTE) or Long-Term Evolution Advanced (LTE-A) system to achieve technical effects similar to those of the NR system; and further, although the present application provides specific implementations for RS resources, the present application can also be used for scenarios such as other physical layer signal/channel resources to achieve technical effects similar to those of the RS resources. Further, the use of a unified design scheme for different scenarios is also conducive to reducing hardware complexity and cost. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a Vehicle-to-Everything (V2X) scenario, and communication scenarios between a terminal and a relay and between the relay and a base station to achieve technical effects similar to those in the terminal and base station scenario. Further, although the original intention of the present application is for the terminal and base station scenario, the present application is also applicable to an Integrated Access and Backhaul (IAB) communication scenario to achieve technical effects similar to those in the terminal and base station scenario. Further, although the original intention of the present application is for a Terrestrial Network (TN) scenario, the present application is also applicable to a Non-Terrestrial Network (NTN) communication scenario to achieve technical effects similar to those in the TN scenario. In addition, the use of a unified solution for different scenarios is also conducive to reducing hardware complexity and cost.

As one embodiment, interpretations of terminologies in the present application refer to definitions in 3GPP specification protocol TS38 series.

As one embodiment, the interpretations of terminologies in the present application refer to definitions in 3GPP specification protocol TS37 series.

It should be noted that, in the absence of conflicts, embodiments and features in the embodiments in any node of the present application can be applied to any other node. In the absence of conflicts, the embodiments and features in the embodiments of the present application can be arbitrarily combined with each other.

The present application discloses a method for a first node used for wireless communication, characterized by comprising:

receiving a first message, wherein the first message comprises at least one parameter list, any parameter list among the at least one parameter list comprises a plurality of parameters, and the parameters indicate at least one RS resource;

determining a first parameter, wherein the first parameter is one parameter in a first parameter list, and the first parameter list is one parameter list among the at least one parameter list; and applying a spatial filter of the RS resource indicated by the first parameter to wireless transmission,

wherein a determination of the first parameter depends on at least a measurement for the RS resource indicated by the first parameter and a position of the first parameter in the first parameter list.

As one embodiment, a problem to be solved by the present application comprises: how to determine the spatial filter of the RS resource applied by UE to wireless transmission.

As one embodiment, characteristics of the above method comprise that: any parameter list among the at least one parameter list comprises a plurality of parameters, and the parameters indicate at least one RS resource.

As one embodiment, the characteristics of the above method comprise that: the determination of the first parameter depends on at least the measurement for the RS resource indicated by the first parameter and the position of the first parameter in the first parameter list.

As one embodiment, the above method considers the impact of the position of the first parameter in the first parameter list on the determination of the first parameter.

As one embodiment, the above method facilitates the selection of a more suitable spatial filter.

As one embodiment, the above method facilitates the reduction of the number of times of parameter selections.

As one embodiment, the above method facilitates the shortening of the delay of the spatial filter of the RS resource for wireless transmission.

As one embodiment, the above method avoids data interruption.

As one embodiment, the above method facilitates the achievement of AI- or ML-based beam management.

As one embodiment, the above method facilitates the achievement of AI- or ML-based mobility.

According to an aspect of the present application, it is characterized in that the determination of the first parameter depends on a position of a second parameter in the first parameter list; and before the first parameter is applied, a spatial filter of the RS resource indicated by the second parameter is applied to the wireless transmission.

As one embodiment, the characteristics of the above method comprise: the determination of the first parameter depends on at least the measurement for the RS resource indicated by the first parameter, the position of the first parameter in the first parameter list, and the position of the second parameter in the first parameter list.

As one embodiment, the above method considers the impact of the position of the second parameter in the first parameter list on the determination of the first parameter.

As one embodiment, the above method facilitates the determination of a more suitable parameter.

According to an aspect of the present application, it is characterized in that no more than Q1 parameters are between a position of a candidate for the first parameter in the first parameter list and the position of the second parameter in the first parameter list; and the first parameter list is composed of more than Q1 parameters, and Q1 is a non-negative integer.

As one embodiment, the above method considers a relationship between the candidate for the first parameter and the second parameter.

As one embodiment, the above method facilitates the selection of a more suitable parameter.

As one embodiment, the above method facilitates the shortening of the delay.

As one embodiment, the above method avoids the selection of an unsuitable or incorrect parameter.

As one embodiment, the above method avoids data interruption.

According to an aspect of the present application, it is characterized by comprising:
a first processing machine determining the first parameter list,
wherein the at least one parameter list comprises a plurality of parameter lists, and a determination of the first parameter list depends on measurements for RS resources indicated by the plurality of parameters in the first parameter list; the plurality of parameter lists comprise the second parameter; and the first parameter list is one of the plurality of parameter lists, and the determination of the first parameter list is performed after the determination of the first parameter.

As one embodiment, the above method determines the first parameter list after determining the first parameter.

As one embodiment, the above method increases the candidate for the first parameter, so that the selection of the first parameter is more flexible.

According to an aspect of the present application, it is characterized by comprising:
determining the first parameter list,
wherein the at least one parameter list comprises a plurality of parameter lists, and the determination of the first parameter list depends on the measurements for RS resources indicated by the plurality of parameters in the first parameter list.

As one embodiment, the above method considers the impact of the measurements for RS resources indicated by the plurality of parameters in the first parameter list on the determination of the first parameter list.

As one embodiment, the above method improves the reliability of the selection of the first parameter list.

According to an aspect of the present application, it is characterized in that a measurement result for the RS resource indicated by the first parameter is better than or not worse than a first threshold, and the first threshold depends on the position of the first parameter in the first parameter list.

As one embodiment, the above method considers the impact of the first threshold on the determination of the first parameter, wherein the first threshold depends on the position of the first parameter in the first parameter list.

As one embodiment, the above method ensures the quality of the first parameter through the first threshold.

According to an aspect of the present application, it is characterized in that,
measuring at least one RS resource after determining the first parameter, and sending a second message, in response to a first condition being satisfied, the second message comprising a measurement result for the at least one RS resource,
wherein the first condition depends on the measurement result for the at least one RS resource, at least two parameters in the first parameter list indicate RS resources associated with different cell identities, and the first condition depends on the cell identities with which the RS resources indicated by a plurality of parameters in the first parameter list are associated.

According to an aspect of the present application, it is characterized in that the behavior determining the first parameter comprises sending a third message, wherein the third message indicates the first parameter.

According to an aspect of the present application, it is characterized in that the behavior determining the first parameter comprises receiving a fourth message, and the fourth message indicates that the first parameter is applied.

The present application discloses a method for a second node used for wireless communication, characterized by comprising:
sending a first message, wherein the first message comprises at least one parameter list, any parameter list among the at least one parameter list comprises a plurality of parameters, and the parameters indicate at least one RS resource,
wherein a recipient of the first message determines a first parameter, wherein the first parameter is one parameter in a first parameter list, and the first parameter list is one parameter list among the at least one parameter list; the recipient of the first message applies a spatial filter of the RS resource indicated by the first parameter to wireless transmission; and a determination of the first parameter depends on at least a measurement for the RS resource indicated by the first parameter and a position of the first parameter in the first parameter list.

According to an aspect of the present application, it is characterized in that the determination of the first parameter depends on a position of a second parameter in the first parameter list; and before the first parameter is applied, a spatial filter of the RS resource indicated by the second parameter is applied to the wireless transmission.

According to an aspect of the present application, it is characterized in that no more than Q1 parameters are between a position of a candidate for the first parameter in the first parameter list and the position of the second parameter in the first parameter list; and the first parameter list is composed of more than Q1 parameters, and Q1 is a non-negative integer.

According to an aspect of the present application, it is characterized in that the recipient of the first message determines the first parameter list, wherein the at least one parameter list comprises a plurality of parameter lists, and a determination of the first parameter list depends on measurements for RS resources indicated by the plurality of parameters in the first parameter list; the plurality of parameter lists comprise the second parameter; and the first parameter list is one of the plurality of parameter lists, and the determination of the first parameter list is performed after the determination of the first parameter.

According to an aspect of the present application, it is characterized in that the recipient of the first message determines the first parameter list, wherein the at least one parameter list comprises a plurality of parameter lists, and the determination of the first parameter list depends on the measurements for RS resources indicated by the plurality of parameters in the first parameter list.

According to an aspect of the present application, it is characterized in that a measurement result for the RS resource indicated by the first parameter is better than or not worse than a first threshold, and the first threshold depends on the position of the first parameter in the first parameter list.

According to an aspect of the present application, it is characterized in that the recipient of the first message measures at least one RS resource after determining the first parameter; in response to a first condition being satisfied, the recipient of the first message sends a second message, and the second message comprises a measurement result for the at least one RS resource, wherein the first condition depends on the measurement result for the at least one RS resource, at least two parameters in the first parameter list indicate RS resources associated with different cell identities, and the first condition depends on the cell identities with which the RS resources indicated by a plurality of parameters in the first parameter list are associated.

According to an aspect of the present application, it is characterized by comprising:
receiving a third message,
wherein the behavior determining the first parameter comprises sending the third message, wherein the third message indicates the first parameter.

According to an aspect of the present application, it is characterized by comprising:
sending a fourth message,
wherein the behavior determining the first parameter comprises receiving the fourth message, and the fourth message indicates that the first parameter is applied.

The present application discloses a first node used for wireless communication, characterized by comprising:
a first receiver receiving a first message, wherein the first message comprises at least one parameter list, any parameter list among the at least one parameter list comprises a plurality of parameters, and the parameters indicate at least one RS resource;
a first processing machine determining a first parameter, wherein the first parameter is one parameter in a first parameter list, and the first parameter list is one parameter list among the at least one parameter list; and applying a spatial filter of the RS resource indicated by the first parameter to wireless transmission,
wherein a determination of the first parameter depends on at least a measurement for the RS resource indicated by the first parameter and a position of the first parameter in the first parameter list.

The present application discloses a second node used for wireless communication, characterized by comprising:
a second transmitter sending a first message, wherein the first message comprises at least one parameter list, any parameter list among the at least one parameter list comprises a plurality of parameters, and the parameters indicate at least one RS resource,
wherein a recipient of the first message determines a first parameter, wherein the first parameter is one parameter in a first parameter list, and the first parameter list is one parameter list among the at least one parameter list; the recipient of the first message applies a spatial filter of the RS resource indicated by the first parameter to wireless transmission; and a determination of the first parameter depends on at least a measurement for the RS resource indicated by the first parameter and a position of the first parameter in the first parameter list.

As one embodiment, compared with the traditional solution, the present application has the following advantages:
-. the selection of a more suitable parameter is facilitated;
-. the reduction of the number of times of parameter selections is facilitated;
-. the shortening of the delay of the spatial filter of the RS resources for wireless transmission is facilitated;
-. data interruption is avoided;
-. the achievement of AI- or ML-based beam management is facilitated; and
-. the achievement of AI- or ML-based mobility is facilitated.

### Brief Description of the Drawings

Other features, purposes and advantages of the present application will become more apparent by reading the detailed description of non-limiting embodiments with reference to the following drawings:
FIG. 1 shows a flow chart of communication of a first node according to one embodiment of the present application;
FIG. 2 shows a schematic diagram of a network architecture according to one embodiment of the present application;
FIG. 3 shows a schematic diagram of an embodiment of a wireless protocol architecture for a user plane and a control plane according to one embodiment of the present application;
FIG. 4 shows a schematic diagram of a first communication device and a second communication device according to one embodiment of the present application;
FIG. 5 shows a flow chart of wireless signal transmission according to one embodiment of the present application;
FIG. 6 shows a schematic diagram of a determination of a first parameter depending on a position of a second parameter in a first parameter list according to one embodiment of the present application;
FIG. 7 shows a schematic diagram in which no more than Q1 parameters are between a position of a candidate for a first parameter in a first parameter list and a position of a second parameter in the first parameter list according to one embodiment of the present application;
FIG. 8 shows a schematic diagram in which a measurement result for an RS resource indicated by a first parameter is better than or not worse than a first threshold according to one embodiment of the present application;
FIG. 9 shows a schematic diagram of using ASN.1 to configure one parameter list according to one embodiment of the present application;
FIG. 10 shows a schematic diagram of using ASN.1 to configure one parameter list according to another embodiment of the present application;
FIG. 11 shows a schematic diagram of an artificial intelligence processing system according to one embodiment of the present application;
FIG. 12 shows a structural block diagram of a processing device used in a first node according to one embodiment of the present application;
FIG. 13 shows a structural block diagram of a processing device used in a second node according to one embodiment of the present application; and
FIG. 14 shows a schematic diagram of an artificial intelligence processing system according to another embodiment of one embodiment of the present application.

### Detailed Description of Embodiments

The technical solutions of the present application will be further described in detail below in conjunction with drawings. It should be noted that, in the absence of conflicts, embodiments and the features in the embodiments in the present application can be arbitrarily combined with each other.

### Embodiment 1

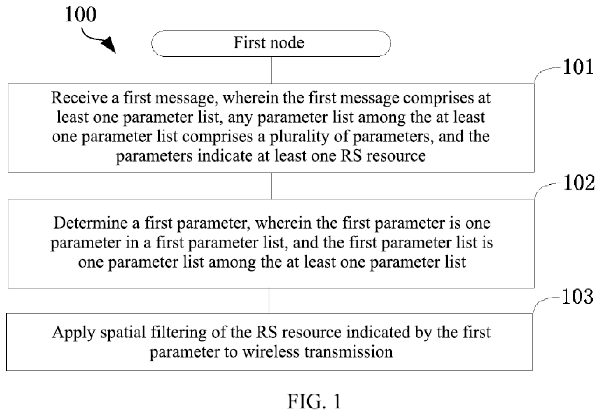

Embodiment 1 illustrates a flow chart of communication of a first node according to one embodiment of the present application, as shown in FIG. 1. In FIG. 1, each block represents one step. It is particularly emphasized that the order of the blocks in the figure does not represent the temporal relationship between the steps represented.

In Embodiment 1, in step 101, the first node in the present application receives a first message, the first message comprises at least one parameter list, any parameter list among the at least one parameter list comprises a plurality of parameters, and the parameters indicate at least one RS resource; in step 102, a first parameter is determined, wherein the first parameter is one parameter in a first parameter list, and the first parameter list is one parameter list among the at least one parameter list; and in step 103, a spatial filter of the RS resource indicated by the first parameter is applied to wireless transmission, wherein a determination of the first parameter depends on at least a measurement for the RS resource indicated by the first parameter and a position of the first parameter in the first parameter list.

As one embodiment, the first message comprises one Radio Resource Control (RRC) message.

As one embodiment, the first message is one RRC message.

As one embodiment, the first message is transmitted through a Dedicated Control Channel (DCCH).

As one embodiment, the first message is transmitted through a Sidelink Control Channel (SCCH).

As one embodiment, the first message is one cell common RRC message.

The above method enables a plurality of pieces of UE in a cell to acquire at least one parameter list.

The above method saves signaling overheads.

As one embodiment, the first message is one System Information Block 1 (SIB1) message.

As one embodiment, the first message is one UE-specific RRC message.

The above method configures at least one parameter list specific to the first node.

The above method ensures information security.

As one embodiment, the first message comprises at least one RRCReconfiguration message.

As one embodiment, the first message comprises at least one RRCResume message.

As one embodiment, the first message comprises at least one RRCSetup message.

As one embodiment, the first message comprises at least one RRCReestablishment message.

As one embodiment, the first message is at least one RRCReconfiguration message.

As one embodiment, the first message is at least one RRCResume message.

As one embodiment, the first message is at least one RRCSetup message.

As one embodiment, the first message is at least one RRCReestablishment message.

As one embodiment, a number of parameter lists comprised in the first message is configurable.

As one embodiment, a maximum value of the number of parameter lists comprised in the first message is configurable.

As one embodiment, the maximum value of the number of parameter lists comprised in the first message is fixed.

As one embodiment, the maximum value of the number of parameter lists comprised in the first message is equal.

As one embodiment, the at least one parameter list comprised in the first message is only one parameter list.

As one embodiment, the at least one parameter list comprised in the first message refers to a plurality of parameter lists.

As one embodiment, the first message configures the at least one parameter list.

As one embodiment, the first message indicates the at least one parameter list.

As one embodiment, the first message comprises at least one RRC information block #1, and the at least one RRC information block#1 comprises at least one parameter list.

As one sub-embodiment of the above embodiment, any RRC information block #1 of the at least one RRC information block #1 in the first message is one RRC IE.

As one sub-embodiment of the above embodiment, any RRC information block #1 of the at least one RRC information block #1 in the first message is one RRC field.

As one sub-embodiment of the above embodiment, any RRC information block #1 of the at least one RRC information block #1 in the first message corresponds to one parameter list among the at least one parameter list.

As one sub-embodiment of the above embodiment, any RRC information block #1 of the at least one RRC information block #1 in the first message indicates one parameter list among the at least one parameter list.

As one sub-embodiment of the above embodiment, any RRC information block #1 of the at least one RRC information block #1 in the first message configures one list among the at least one parameter list.

As one sub-embodiment of the above embodiment, any RRC information block #1 of the at least one RRC information block #1 in the first message comprises at least one parameter.

As one sub-embodiment of the above embodiment, any RRC information block #1 of the at least one RRC information block #1 in the first message comprises an RS resource indicated by at least one parameter.

As one sub-embodiment of the above embodiment, any RRC information block #1 of the at least one RRC information block #1 in the first message comprises an index of the RS resource indicated by at least one parameter.

As one sub-embodiment of the above embodiment, any RRC information block #1 of the at least one RRC information block #1 in the first message comprises at least one threshold.

As one sub-embodiment of the above embodiment, any RRC information block #1 of the at least one RRC information block #1 in the first message comprises a threshold corresponding to at least one parameter.

As one sub-embodiment of the above embodiment, any RRC information block #1 of the at least one RRC information block #1 in the first message comprises a cell identity associated with the RS resource indicated by at least one parameter.

As one embodiment, in response to the first message being received, the first node processes the at least one parameter list.

As one embodiment, in response to the first message being received, the first node executes the at least one parameter list.

As one embodiment, in response to the first message being received, the first node stores the at least one parameter list.

As one sub-embodiment of the embodiment, the at least one parameter list is stored in one UE variable.

As one sub-embodiment of the embodiment, in response to the behavior applying the spatial filter of the RS resource indicated by the first parameter to the wireless transmission, at least one parameter list is deleted from the one UE variable.

As one sub-embodiment of the embodiment, in response to the behavior applying the spatial filter of the RS resource indicated by the first parameter to the wireless transmission, at least one parameter is deleted from the one UE variable.

As one sub-embodiment of the embodiment, in response to receiving one RRC information block #1, the one UE variable is updated.

As one sub-embodiment of the embodiment, the behavior updating the one UE variable is: deleting at least one parameter list from the one UE variable.

As one sub-embodiment of the embodiment, the behavior updating the one UE variable is: adding at least one parameter list to the one UE variable.

As one sub-embodiment of the embodiment, the behavior updating the one UE variable is: deleting at least one parameter from the one UE variable.

As one sub-embodiment of the embodiment, the behavior updating the one UE variable is: adding at least one parameter to the one UE variable.

As one embodiment, the plurality of parameters are 2 parameters.

As one embodiment, the plurality of parameters are at least 2 parameters.

As one embodiment, a number of parameters comprised in any parameter list among the at least one parameter list is configurable.

As one embodiment, a maximum value of the number of parameters comprised in any parameter list among the at least one parameter list is configurable.

As one embodiment, the maximum value of the number of parameters comprised in any parameter list among the at least one parameter list is fixed.

As one embodiment, the maximum value of the number of parameters comprised in any parameter list among the at least one parameter list is equal.

As one embodiment, the parameters indicate only one RS resource.

As one embodiment, the parameters indicate one or more RS resources.

As one embodiment, the RS resource is an SSB.

As one embodiment, the SSB is a Synchronization Signal (SS)/PBCH.

As one embodiment, the SSB is a Synchronization Signal Block.

As one embodiment, the RS resource is a Channel State Information (CSI)-RS.

As one example, the RS resource is a TRS (CSI-RS for tracking).

As one embodiment, the RS resource is any one of the SSB or the CSI-RS.

As one embodiment, the RS resource is any one of the SSB or the CSI-RS or the TRS.

As one embodiment, RS resources indicated by all parameters in the at least one parameter list are configured to one cell.

As one embodiment, the RS resources indicated by all parameters in the at least one parameter list are configured to a plurality of cells.

As one embodiment, the meaning of a phrase "the parameters indicate at least one RS resource" is that: the parameters explicitly indicate the at least one RS resource.

As one embodiment, the meaning of the phrase "the parameters indicate at least one RS resource" is that: the parameters implicitly indicate the at least one RS resource.

As one embodiment, the meaning of the phrase "the parameters indicate at least one RS resource" is that: the parameters comprise the at least one RS resource.

As one embodiment, the meaning of the phrase "the parameters indicate at least one RS resource" is that: the parameters are the at least one RS resource.

As one embodiment, the meaning of the phrase "the parameters indicate at least one RS resource" is that: the parameters correspond to the at least one RS resource.

As one embodiment, the meaning of the phrase "the parameters indicate at least one RS resource" is that: the parameters are correlated with the at least one RS resource.

As one embodiment, the parameters comprise an index of an RS resource.

As one embodiment, the parameters comprise an index of each RS resource among the at least one RS resource indicated by the parameters.

As one embodiment, the parameters comprise a TCI-StateId.

As one embodiment, the parameters comprise the TCI-StateId, and a TCI State indicated by the TCI-StateId comprises an index of each RS resource among the at least one RS resource indicated by the parameters.

As one embodiment, the parameters comprise a cell identity.

As one embodiment, the parameters comprise a cell identity with which each RS resource among the at least one RS resource indicated by the parameters is associated.

As one embodiment, the parameters comprise thresholds corresponding to the parameters.

As one embodiment, the thresholds are common to the at least one parameter list.

As one embodiment, the thresholds are common to the first parameter list.

As one embodiment, the thresholds are parameter-specific.

As one embodiment, the thresholds corresponding to the parameters are used for triggering a report of an RS resource indicated by the parameters.

As one embodiment, the thresholds corresponding to the parameters are used for triggering an application of a spatial filter of an RS resource indicated by the parameters.

As one embodiment, the thresholds corresponding to the parameters are used for triggering a switching of the RS resource indicated by the parameters.

As one embodiment, the first parameter is any parameter in the first parameter list.

As one sub-embodiment of the above embodiment, a determination of any parameter in the first parameter list depends on at least a measurement for an RS resource indicated by any parameter in the first parameter list and a position of any parameter of the first parameter list in the first parameter list.

As one embodiment, the first parameter is one parameter in the first parameter list.

As one sub-embodiment of the above embodiment, a determination of only the first parameter in the first parameter list depends on at least the measurement for the RS resource indicated by the first parameter and the position of the first parameter in the first parameter list.

As one sub-embodiment of the above embodiment, a determination of one parameter other than the first parameter in the first parameter list does not depend on a measurement for an RS resource indicated by the one parameter other than the first parameter and a position of the one parameter other than the first parameter in the first parameter list.

As one embodiment, the first parameter is applied while determining the first parameter.

As one embodiment, a time when the first parameter is applied is later than a time when the first parameter is determined.

As one embodiment, the behavior determining the first parameter comprises: selecting the first parameter.

As one embodiment, the behavior determining the first parameter comprises: confirming the first parameter.

As one embodiment, the behavior determining the first parameter comprises: responding to the first parameter.

As one embodiment, the behavior determining the first parameter comprises: applying the first parameter.

As one embodiment, the behavior determining the first parameter comprises: switching to the first parameter.

As one embodiment, the behavior determining the first parameter comprises: at least one of selecting the first parameter or confirming the first parameter or responding to the first parameter or applying the first parameters.

As one embodiment, the behavior determining the first parameter comprises: measuring the RS resource indicated by the first parameter.

As one embodiment, the first parameter list is determined at least before the behavior applying the spatial filter of the RS resource indicated by the first parameter to the wireless transmission.

As one embodiment, the behavior determining the first parameter list comprises: selecting the first parameter list.

As one embodiment, the behavior determining the first parameter list comprises: confirming the first parameter list.

As one embodiment, the behavior determining the first parameter list comprises: responding to the first parameter list.

As one embodiment, the behavior determining the first parameter list comprises: applying the first parameter list.

As one embodiment, the behavior determining the first parameter list comprises: switching to the first parameter list.

As one embodiment, the behavior determining the first parameter list comprises: switching to the first parameter list.

As one embodiment, the behavior determining the first parameter list comprises: determining the first parameter list among the at least one parameter list.

As one embodiment, the first parameter list is first determined, and then the first parameter is determined.

As one sub-embodiment of the embodiment, the behavior determining the first parameter list depends on the behavior determining the first parameter.

As one sub-embodiment of the embodiment, the first parameter list is first determined, and then the first parameter is determined from the first parameter list.

As one sub-embodiment of the embodiment, the first parameter list is determined first among the at least one parameter list, and then the first parameter is determined from the at least one parameter list.

As one sub-embodiment of the embodiment, the first parameter list is randomly determined.

As one sub-embodiment of the embodiment, the first parameter list is determined according to a measurement result.

As one sub-embodiment of the embodiment, the first parameter list is determined according to an RRC configuration sequence.

As one sub-embodiment of the embodiment, the first parameter list is determined according to an index of a parameter list.

As one embodiment, the first parameter is first determined, and then the first parameter list is determined.

As one sub-embodiment of the embodiment, the behavior determining the first parameter depends on the behavior determining the first parameter list.

As one sub-embodiment of the embodiment, the first parameter list is first determined, and then the first parameter list is determined according to the first parameter.

As one sub-embodiment of the embodiment, the first parameter is first determined, and then the first parameter list is determined according to the first parameter among the at least one parameter list.

As one embodiment, the first parameter list is any parameter list among the at least one parameter list.

As one embodiment, the first parameter list is a default parameter list among the at least one parameter list.

As one embodiment, the first parameter list is a parameter list determined from the at least one parameter list.

As one embodiment, "a spatial filter of the RS resource indicated by the first parameter is applied to wireless transmission" comprises: the first node assuming presence of a Quasi Co-Location (QCL) relationship between an RS on the RS resource indicated by the first parameter and a Demodulation Reference Signal (DMRS) used by wireless transmission.

As one embodiment, the quasi co-location relationship is one of a type A, a type B, a type C, and a type D.

As one embodiment, the quasi co-location relationship is indicated by qcl-Type.

As one embodiment, on the basis of the above assumption of the quasi co-location relationship, the first node determines a spatial filter for the wireless transmission.

As one embodiment, on the basis of the above assumption of the quasi co-location relationship, how to perform the wireless transmission is determined by the first node itself.

As one embodiment, the wireless transmission comprises sending of the first node, and the spatial filter comprises a Tx spatial filter (or a spatial domain transmit filter).

As one embodiment, "a spatial filter of the RS resource indicated by the first parameter is applied to wireless transmission" comprises: the first node using the Tx spatial filter identical to a reference Rx spatial filter to send wireless signals, and the reference Rx spatial filter being used for receiving reference signals on the RS resource indicated by the first parameter.

As one sub-embodiment of the above embodiment, the above wireless signals comprise at least one of a Physical Uplink Shared Channel (PUSCH), a Physical Uplink Control Channel (PUCCH) and a Sounding Reference Signal (SRS).

As one embodiment, the wireless transmission comprises the reception of the first node, and the spatial filter comprises a Rx spatial filter (or a spatial domain receive filter).

As one embodiment, "a spatial filter of the RS resource indicated by the first parameter is applied to wireless transmission" comprises: the first node using the Rx spatial filter identical to the reference Rx spatial filter to receive wireless signals, and the reference Rx spatial filter being used for receiving reference signals on the RS resource indicated by the first parameter.

As one sub-embodiment of the above embodiment, the above wireless signals comprise at least one of a Physical Downlink Shared Channel (PDSCH), a Physical Downlink Control Channel (PDCCH) and a CSI-RS.

As one embodiment, a phrase "a measurement for an RS resource indicated by one parameter" refers to: an evaluation for the RS resource indicated by the one parameter.

As one embodiment, the phrase "a measurement for an RS resource indicated by one parameter" refers to: a prediction for the RS resource indicated by the one parameter.

As one sub-embodiment of the embodiment, the prediction depends on at least one of a movement direction or a movement speed or a signal quality measurement of the first node.

As one embodiment, the phrase "a measurement for an RS resource indicated by one parameter" refers to: monitoring for the RS resource indicated by the one parameter.

As one embodiment, the phrase "a measurement for an RS resource indicated by one parameter" refers to: a signal quality measurement for the RS resource indicated by the one parameter.

As one embodiment, the signal quality measurement is a Radio Resource Management (RRM) measurement.

As one embodiment, the signal quality measurement is a Reference Signal Received Power (RSRP) measurement.

As one embodiment, the signal quality measurement is a Reference Signal Received Quality (RSRQ) measurement.

As one embodiment, the signal quality measurement is a Signal to Interference plus Noise Ratio (SINR) measurement.

As one embodiment, the signal quality measurement comprises Layer 1 (L1) filtering.

As one embodiment, the signal quality measurement comprises Layer 3 (L3) filtering.

As one embodiment, the signal quality measurement is not subjected to the L1 filtering or the L3 filtering.

As one embodiment, a second parameter is one parameter in the first parameter list; and before the first parameter is applied, the spatial filter of the RS resource indicated by the second parameter is applied to the wireless transmission.

As one embodiment, the second parameter is one parameter in a second parameter list; and before the first parameter is applied, a spatial filter of the RS resource indicated by the second parameter is applied to the wireless transmission.

As one embodiment, the first parameter list is configured to the second parameter; and before the first parameter is applied, the spatial filter of the RS resource indicated by the second parameter is applied to the wireless transmission.

As one sub-embodiment of the embodiment, any parameter in the first parameter list is configured to the second parameter.

As one sub-embodiment of the embodiment, any parameter in the first parameter list is a candidate parameter for the second parameter.

As one embodiment, the second parameter list is one parameter list other than the first parameter list.

As one embodiment, the second parameter list is one parameter list other than the first parameter list among the at least one parameter list.

As one embodiment, the determination of the first parameter depends on a measurement for an RS resource indicated by the second parameter.

As one embodiment, the determination of the first parameter does not depend on the measurement for the RS resource indicated by the second parameter.

As one embodiment, the determination of the first parameter depends on the measurement for the RS resource indicated by the first parameter and the position of the first parameter in the first parameter list.

As one embodiment, the determination of the first parameter depends on a measurement for an RS resource indicated by at least one parameter and the position of the first parameter in the first parameter list; and the first parameter is one parameter among the at least one parameter.

As one embodiment, the determination of the first parameter depends on the measurement for the RS resource indicated by at least one parameter and the position of the at least one parameter in the first parameter list; and the first parameter is one parameter among the at least one parameter.

As one embodiment, the determination of the first parameter depends on the measurement for the RS resource indicated by at least one parameter and a position of the at least one parameter in a respective parameter list to which the at least one parameter belongs; the first parameter is one parameter among the at least one parameter; each parameter among the at least one parameter belongs to one parameter list; and the first parameter belongs to the first parameter list.

As one embodiment, the determination of the first parameter depends on the measurement for the RS resource indicated by the first parameter, the measurement for the RS resource indicated by the second parameter, and the position of the first parameter in the first parameter list.

As one embodiment, the first parameter is one parameter, whose measurement result is better than or not worse than a first threshold, at a front position in the first parameter list.

As one embodiment, the first parameter is one parameter, whose measurement result is better than or not worse than the first threshold, with a smallest index in the first parameter list.

As one embodiment, the first parameter is one parameter adjacent to the second parameter in the first parameter list; and before the first parameter is applied, the spatial filter of the RS resource indicated by the second parameter is applied to the wireless transmission.

As one embodiment, an index of one parameter indicates a position of the one parameter in one parameter list.

As one sub-embodiment of the above embodiment, if an index of one parameter is less than an index of another parameter, the one parameter in the one parameter list precedes the another parameter in the one parameter list.

As one sub-embodiment of the above embodiment, if an index of one parameter is greater than an index of another parameter, the one parameter in the one parameter list precedes the another parameter in the one parameter list.

As one sub-embodiment of the above embodiment, if an index of one parameter and an index of another parameter are adjacent, the one parameter in the one parameter list and the another parameter in the one parameter list are consecutive.

As one sub-embodiment of the above embodiment, if a difference between an index of one parameter and an index of another parameter is equal to 1, the one parameter in the one parameter list and the another parameter in the one parameter list are consecutive.

As one sub-embodiment of the above embodiment, any parameter in the one parameter list is configured with one index.

As one sub-embodiment of the above embodiment, any parameter in the one parameter list comprises one index.

As one sub-embodiment of the above embodiment, an index of any parameter in the one parameter list is not greater than one threshold, and the one threshold is a positive integer.

As one sub-embodiment of the above embodiment, the one threshold is configurable.

As one sub-embodiment of the above embodiment, the one threshold is pre-defined.

As one sub-embodiment of the above embodiment, the one threshold is a maximum value of the number of parameters in the one parameter list.

As one sub-embodiment of the above embodiment, the one threshold is a maximum value of the number of parameters that can be configured in the one parameter list.

As one embodiment, an order of one parameter in one parameter list indicates a position of the one parameter in the one parameter list.

As one sub-embodiment of the above embodiment, if an order of the one parameter in the one parameter list precedes an order of another parameter in the one parameter list, the one parameter in the one parameter list precedes the another parameter in the one parameter list.

As one sub-embodiment of the above embodiment, if an order of one parameter in the one parameter list follows an order of another parameter in the one parameter list, the one parameter in the one parameter list precedes the another parameter in the one parameter list.

As one sub-embodiment of the above embodiment, if the order of the one parameter in the one parameter list is adjacent to the order of the another parameter in the one parameter list, the one parameter in the one parameter list and the another parameter in the one parameter list are consecutive.

As one sub-embodiment of the above embodiment, if no parameter is comprised between the one parameter and the another parameter in the one parameter list, the one parameter in the one parameter list and the another parameter in the one parameter list are consecutive.

As one sub-embodiment of the above embodiment, an order of one parameter in one parameter list is an order of the one parameter in the RRC information block #1 for the one parameter list; and the first message comprises at least one RRC information block #1, and the at least one RRC information block #1 comprises at least one parameter list.

### Embodiment 2

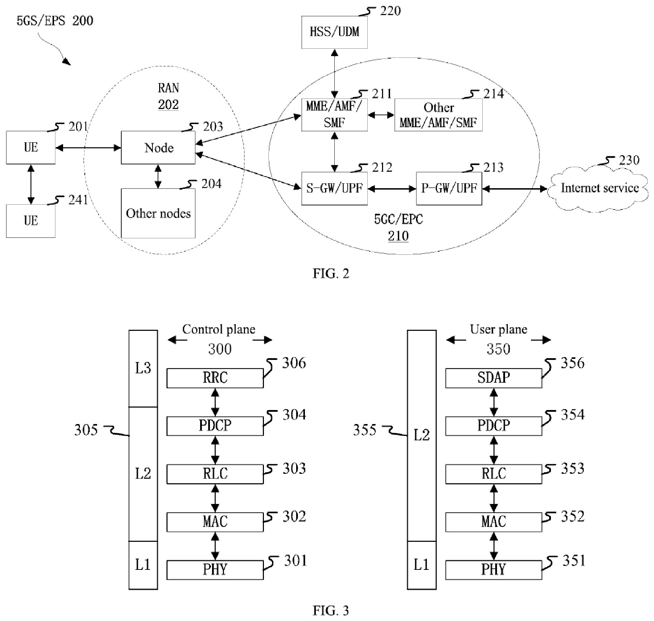

Embodiment 2 illustrates a schematic diagram of a network architecture according to one embodiment of the present application, as shown in FIG. 2. FIG. 2 indicates a network architecture 200 of a 5G New Radio (NR)/Long-Term Evolution (LTE)/Long-Term Evolution Advanced (LTE-A) system. The 5G NR/LTE/LTE-A network architecture 200 may be referred to as 5G System (5GS)/Evolved Packet System (EPS) 200 or some other suitable terminologies. The 5GS/EPS 200 comprises at least one of User Equipment (UE) 201, a Radio Access Network (RAN) 202, a 5G Core Network (5GC)/Evolved Packet Core (EPC) 210, a Home Subscriber Server (HSS)/Unified Data Management (UDM) 220, and an Internet service 230. The 5GS/EPS may be interconnected with other access networks, but these entities/interfaces are not shown for simplicity. As shown in the figure, the 5GS/EPS provides a packet switching service, but those skilled in the art will readily appreciate that various concepts presented throughout the present application can be extended to networks that provide circuit switching services or other cellular networks. The RAN comprises a node 203 and other nodes 204. The node 203 provides user and control plane protocol termination towards the UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a Basic Service Set (BSS), an Extended Service Set (ESS), a Transmitter Receiver Point (TRP), or some other suitable terminologies. The node 203 provides an access point to the 5GC/EPC210 for the UE201. Examples of the UE201 comprise a cellular phone, a smart phone, a Session Initiation Protocol (SIP) phone, a laptop computer, a Personal Digital Assistant (PDA), a satellite radio, non-terrestrial base station communication, satellite mobile communication, a global positioning system, a multimedia device, a video device, a digital audio player (e.g., an MP3 player), a camera, a game console, a drone, an aircraft, a narrowband Internet of Things device, a machine type communication device, a land vehicle, an automobile, a wearable device, or any other similarly functional devices. Those skilled in the art may also refer to the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terminologies. The node 203 is connected to the 5GC/EPC210 through an S1/NG interface. The 5GC/EPC210 comprises a Mobility Management Entity (MME)/Authentication Management Field (AMF)/Session Management Function (SMF) 211, other MME/AMF/SMF214, a Service Gateway (S-GW)/User Plane Function (UPF) 212, and a Packet Data Network Gateway (P-GW)/UPF213. The MME/AMF/SMF211 is a control node that processes signaling between the UE201 and the 5GC/EPC210. Generally, the MME/AMF/SMF211 provides bearers and connection management. All user Internet Protocol (IP) packets are transmitted through the S-GW/UPF212, and the S-GW/UPF212 itself is connected to the P-GW/UPF213. The P-GW provides UE IP address allocation and other functions. The P-GW/UPF213 is connected to the Internet service 230. The Internet service 230 comprises operator-corresponding Internet protocol services, which may specifically comprise the Internet, an Intranet, an IP Multimedia Subsystem (IMS) and packet switching streaming services.

As one embodiment, the UE201 corresponds to a first node in the present application.

As one embodiment, the UE201 is one piece of User Equipment (UE).

As one embodiment, the UE201 is one Base Station (BS) device.

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

Typically, the UE201 is one piece of user equipment, and the node 203 is one base station device.

Typically, the UE201 is one piece of user equipment, and the node 203 is one piece of user equipment.

Typically, the UE201 is one base station device, and the node 203 is one base station device.

As one embodiment, the user equipment supports transmission in a Non-Terrestrial Network (NTN).

As one embodiment, the user equipment supports transmission in a terrestrial network.

As one embodiment, the user equipment supports Dual Connection (DC) transmission.

As one embodiment, the user equipment comprises an aircraft.

As one embodiment, the user equipment comprises a vehicle-mounted terminal.

As one embodiment, the user equipment comprises a ship.

As one embodiment, the user equipment comprises an Internet of Things terminal.

As one embodiment, the user equipment comprises an industrial Internet of Things terminal.

As one embodiment, the user equipment comprises a device that supports low-latency and high-reliability transmission.

As one embodiment, the user equipment comprises a test device.

As one embodiment, the user equipment comprises a signaling tester.

As one embodiment, the user equipment comprises an Integrated Access and Backhaul (IAB)-MT.

As one embodiment, the user equipment supports generating reports using Artificial Intelligence (AI) or Machine Learning.

As one embodiment, the user equipment supports generating a trained model using training data or generating partial parameters in a trained model using trained data.

As one embodiment, the user equipment supports determining at least part of a first message through training.

As one embodiment, the user equipment supports determining at least part of the first message through training.

As one embodiment, the user equipment supports determining a first parameter list through training.

As one embodiment, the user equipment supports determining a first threshold through training.

As one embodiment, the user equipment supports determining Q1 through training.

As one embodiment, the user equipment supports Massive-MIMO.

As one embodiment, the base station device supports transmission in a non-terrestrial network.

As one embodiment, the base station device supports transmission in a terrestrial network.

As one embodiment, the base station device comprises a Base Transceiver Station (BTS).

As one embodiment, the base station device comprises a Node B (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a Centralized Unit (CU).

As one embodiment, the base station device comprises a Distributed Unit (DU).

As one embodiment, the base station device comprises a Transmitter Receiver Point (TRP).

As one embodiment, the base station device comprises a macro cellular base station.

As one embodiment, the base station device comprises a micro cell base station.

As one embodiment, the base station device comprises a pico cell base station.

As one embodiment, the base station device comprises a femtocell.

As one embodiment, the base station device comprises a flying platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the base station device supports Massive-MIMO-based transmission.

As one embodiment, the base station device supports decompressing CSI using AI or deep learning.

### Embodiment 3

Embodiment 3 shows a schematic diagram of an embodiment of a wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 presents the radio protocol architecture for the control plane 300 using three layers: a layer 1, a layer 2, and a layer 3. The Layer 1 (L1 layer) is a lowest layer and implements various Physical Layer (PHY) signal processing functions. The L1 layer will be referred to as a PHY301 herein. A Layer 2 (L2 layer) 305 is above the PHY301, and comprises a Medium Access Control (MAC) sublayer 302, a Radio Link Control (RLC) sublayer 303, and a Packet Data Convergence Protocol (PDCP) sublayer 304. The PDCP sublayer 304 provides multiplexing between different radio bearers and logical channels. The PDCP sublayer 304 also provides security by encrypting data packets and provides handover mobile support. The RLC sublayer 303 provides segmentation and reassembly of upper layer data packets, retransmission of lost data packets, and reordering of data packets to compensate for unordered reception caused by a Hybrid Automatic Repeat Request (HARQ). The MAC sublayer 302 provides multiplexing between logical and transmission channels. The MAC sublayer 302 is also responsible for allocating various radio resources (e.g., resource blocks) in one cell. The MAC sublayer 302 is also responsible for HARQ operations. A Radio Resource Control (RRC) sublayer 306 in the layer 3 (L3 layer) in the control plane 300 is responsible for obtaining radio resources (i.e., radio bearers) and configuring a lower layer using RRC signaling. The radio protocol architecture for the user plane 350 comprises the layer 1 (L1 layer) and the layer 2 (L2 layer). The radio protocol architecture in the user plane 350 is substantially the same for a physical layer 351, a PDCP sublayer 354 in an L2 layer 355, an RLC sublayer 353 in the L2 layer 355, and a MAC sublayer 352 in the L2 layer 355 as for the corresponding layers and sublayers in the control plane 300, but the PDCP sublayer 354 also provides header compression for upper layer data packets to reduce the radio transmission overhead. The L2 layer 355 in the user plane 350 also comprises a Service Data Adaptation Protocol (SDAP) sublayer 356, and the SDAP sublayer 356 is responsible for mapping between a QoS (Quality of Service) stream and a Data Radio Bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, a first message in the present application is generated at an RRC306.

As one embodiment, the first message in the present application is generated at a MAC302 or a MAC352.

As one embodiment, the first message in the present application is generated in the PHY301 or a PHY351.

As one embodiment, a second message in the present application is generated at the RRC306.

As one embodiment, the second message in the present application is generated at the MAC302 or the MAC352.

As one embodiment, the second message in the present application is generated in the PHY301 or the PHY351.

As one embodiment, a third message in the present application is generated at the RRC306.

As one embodiment, the third message in the present application is generated at the MAC302 or the MAC352.

As one embodiment, the third message in the present application is generated in the PHY301 or the PHY351.

As one embodiment, a fourth message in the present application is generated at the RRC306.

As one embodiment, the fourth message in the present application is generated at the MAC302 or MAC352.

As one embodiment, the fourth message in the present application is generated at the PHY301 or the PHY351.

### Embodiment 4

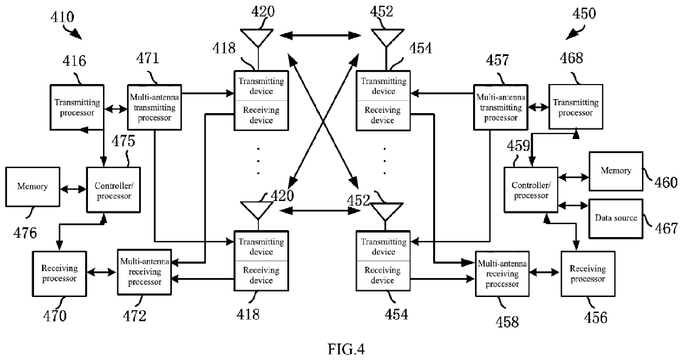

Embodiment 4 shows a schematic diagram of a first communication device and a second communication device according to the present application, as shown in FIG. 4. FIG. 4 is a block diagram of a first communication device 450 and a second communication device 410 in communication with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper layer data packets from a core network are provided to the controller/processor 475. The controller/processor 475 implements functionality of an L2 layer. In transmission from the second communication device 410 to the first communication device 450, the controller/processor 475 provides header compression, encryption, packet segmentation and reordering, multiplexing between logical and transmission channels, and radio resource allocation to the first communication device 450 on the basis of various priority metrics. The controller/processor 475 is also responsible for retransmission of lost packets, and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate Forward Error Correction (FEC) at the second communication device 410, and signal cluster mapping on the basis of various modulation schemes (e.g., Binary Phase Shift Keying (BPSK), quadrature phase shift keying (QPSK), M-Phase Shift Keying (M-PSK), and M-Quadrature Amplitude Modulation (M-QAM)). The multi-antenna transmitting processor 471 performs digital spatial precoding, comprising codebook-based precoding, non-codebook-based precoding, and beamforming processing, on coded and modulated symbols, to generate one or more spatial streams. The transmitting processor 416 then maps each spatial stream to a subcarrier, multiplexes with a reference signal (e.g., pilot frequency) in a time domain and/or frequency domain, and then uses an Inverse Fast Fourier Transform (IFFT) to generate a physical channel carrying a time domain multi-carrier symbol stream. Then, the multi-antenna transmitting processor 471 performs sending analog precoding/beamforming operation on the time domain multi-carrier symbol stream. Each transmitting device 418 converts a baseband multi-carrier symbol stream provided by the multi-antenna transmitting processor 471 into a radio frequency stream, and then provides the radio frequency stream to the different antennas 420.

In transmission from the second communication device 410 to the first communication device 450, at the first communication device 450, each receiving device 454 receives a signal through a corresponding antenna 452 thereof. Each receiving device 454 recovers information modulated onto a radio frequency carrier and converts the radio frequency stream into a baseband multi-carrier symbol stream to provide the baseband multi-carrier symbol stream to the receiving processor 456. The receiving processor 456 and the multi-antenna receiving processor 458 implement various signal processing functions of the L1 layer. The multi-antenna receiving processor 458 performs receiving analog precoding/beamforming operation on the baseband multi-carrier symbol stream from the receiving device 454. The receiving processor 456 uses a Fast Fourier Transform (FFT) to convert the baseband multi-carrier symbol stream after the receiving the analog precoding/beamforming operation from the time domain to the frequency domain. In the frequency domain, the physical layer data signal and the reference signal are demultiplexed by the receiving processor 456, wherein the reference signal will be used for channel estimation, and the data signal is used for recovering any parallel stream with the first communication device 450 as a destination after multi-antenna detection in the multi-antenna receiving processor 458. Symbols on each spatial stream are demodulated and recovered in the receiving processor 456, and soft decisions are generated. Then, the receiving processor 456 decodes and deinterleaves the soft decisions to recover upper layer data and control signals transmitted by the second communication device 410 on the physical channel. Then, the upper layer data and the control signals are provided to the controller/processor 459. The controller/processor 459 implements the functions of the L2 layer. The controller/processor 459 may be associated with the memory 460 that stores program codes and data. The memory 460 may be referred to as a computer-readable medium. In transmission from the second communication device 410 to the second communication device 450, the controller/processor 459 provides multiplexing between transmission and logical channels, packet reassembly, decryption, header decompression, and control signal processing to recover the upper layer data packets from the core network. Then, the upper layer data packets are provided to all protocol layers above the L2 layer. Various control signals may also be provided to an L3 for L3 processing.

In transmission from the first communication device 450 to the second communication device 410, at the first communication device 450, the data source 467 is used for providing the upper layer data packets to the controller/processor 459. The data source 467 represents all the protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transmission channels on the basis of radio resource allocation, and implements L2 layer functions for the user plane and the control plane. The controller/processor 459 is also responsible for retransmission of lost packets, and signaling to the second communication device 410. The transmitting processor 468 executes modulation mapping and channel coding processing; the multi-antenna transmitting processor 457 performs digital multi-antenna spatial precoding, comprising codebook-based precoding, non-codebook-based precoding, and beamforming processing; and then, the transmitting processor 468 modulates the generated spatial streams into multi-carrier/single-carrier symbol streams, which are provided to the different antenna 452 via the transmitting device 454 after analog precoding/beamforming operation in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the functions at the second communication device 410 are similar to the receiving functions at the first communication device 450 described in the transmission from the second communication device 410 to the first communication device 450. Each receiving device 418 receives a radio frequency signal through the corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 that stores program codes and data. The memory 476 may be referred to as a computer-readable medium. In transmission from the first communication device 450 to the second communication device 410, the controller/processor 475 provides multiplexing between transmission and logical channels, packet reassembly, decryption, header decompression, and control signal processing to recover upper layer data packets from the UE450. The upper layer data packets from the controller/processor 475 may be provided to the core network.

As one embodiment, the first communication device 450 comprises: at least one processor and at least one memory; the at least one memory comprising a computer program code, wherein the at least one memory and the computer program code are configured to be used together with the at least one processor; and the first communication device 450 at least: receives a first message, wherein the first message comprises at least one parameter list, any parameter list among the at least one parameter list comprises a plurality of parameters, and the parameters indicate at least one RS resource; determines a first parameter, wherein the first parameter is one parameter in a first parameter list, and the first parameter list is one parameter list among the at least one parameter list; and applies a spatial filter of the RS resource indicated by the first parameter to wireless transmission, wherein a determination of the first parameter depends on at least a measurement for the RS resource indicated by the first parameter and a position of the first parameter in the first parameter list.

As one embodiment, the first communication device 450 comprises: a memory for storing a computer-readable instruction program, wherein the computer-readable instruction program generates actions when executed by at least one processor, and the actions comprise: receiving the first message, wherein the first message comprises at least one parameter list, any parameter list among the at least one parameter list comprises a plurality of parameters, and the parameters indicate at least one RS resource; determining the first parameter, wherein the first parameter is one parameter in the first parameter list, and the first parameter list is one parameter list among the at least one parameter list; and applying the spatial filter of the RS resource indicated by the first parameter to the wireless transmission, wherein the determination of the first parameter depends on at least the measurement for the RS resource indicated by the first parameter and the position of the first parameter in the first parameter list.

As one embodiment, the second communication device 410 comprises: at least one processor and at least one memory, wherein the at least one memory comprises computer program codes; and the at least one memory and the computer program codes are configured to be used together with the at least one processor. The second communication device 410 at least: sends the first message, wherein the first message comprises at least one parameter list, any parameter list among the at least one parameter list comprises a plurality of parameters, and the parameters indicate at least one RS resource, wherein a recipient of the first message determines the first parameter, wherein the first parameter is one parameter in the first parameter list, and the first parameter list is one parameter list among the at least one parameter list; the recipient of the first message applies the spatial filter of the RS resource indicated by the first parameter to the wireless transmission; and the determination of the first parameter depends on at least the measurement for the RS resource indicated by the first parameter and the position of the first parameter in the first parameter list.

As one embodiment, the second communication device 410 comprises: a memory for storing a computer-readable instruction program, wherein the computer-readable instruction program generates actions when executed by at least one processor, and the actions comprise: sending the first message, wherein the first message comprises at least one parameter list, any parameter list among the at least one parameter list comprises a plurality of parameters, and the parameters indicate at least one RS resource, wherein the recipient of the first message determines the first parameter, wherein the first parameter is one parameter in the first parameter list, and the first parameter list is one parameter list among the at least one parameter list; the recipient of the first message applies the spatial filter of the RS resource indicated by the first parameter to the wireless transmission; and the determination of the first parameter depends on at least the measurement for the RS resource indicated by the first parameter and the position of the first parameter in the first parameter list.

As one embodiment, at least one of the antenna 452, the receiving device 454, the receiving processor 456, and the controller/processor 459 is used for receiving the first message.

As one embodiment, at least one of the antenna 420, the transmitting device 418, the transmitting processor 416, and the controller/processor 475 is used for sending the first message.

As one embodiment, at least one of the antenna 452, the transmitting device 454, the transmitting processor 468, and the controller/processor 459 is used for sending a second message.

As one embodiment, at least one of the antenna 420, the receiving device 418, the receiving processor 470, and the controller/processor 475 is used for receiving the second message.

As one embodiment, at least one of the antenna 452, the transmitting device 454, the transmitting processor 468, and the controller/processor 459 is used for sending a third message.

As one embodiment, at least one of the antenna 420, the receiving device 418, the receiving processor 470, and the controller/processor 475 is used for receiving the third message.

As one embodiment, at least one of the antenna 452, the receiving device 454, the receiving processor 456, and the controller/processor 459 is used for receiving a fourth message.

As one embodiment, at least one of the antenna 420, the transmitting device 418, the transmitting processor 416, and the controller/processor 475 is used for sending the fourth message.

As one embodiment, the first communication device 450 corresponds to a first node in the present application.

As one embodiment, the second communication device 410 corresponds to a second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

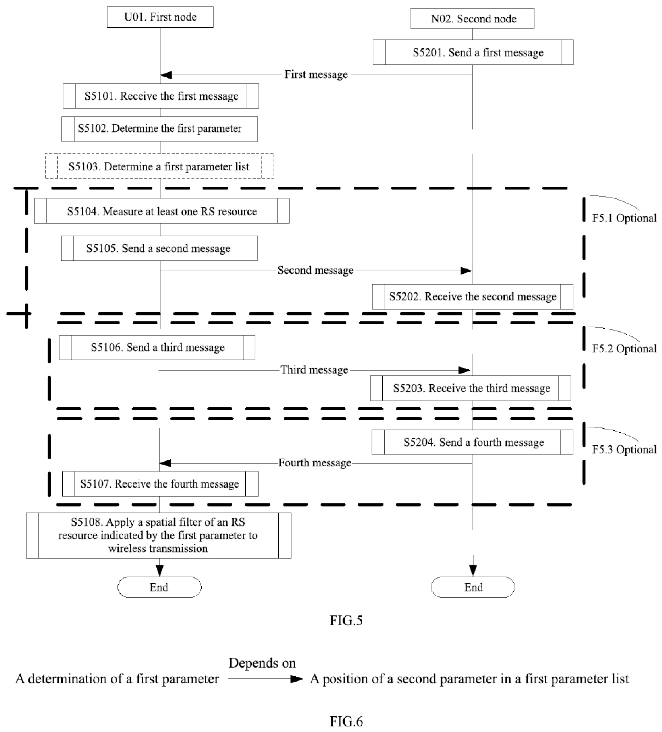

Embodiment 5 illustrates a flow chart of wireless signal transmission according to one embodiment of the present application, as shown in FIG. 5. It is particularly noted that the order in the embodiment does not limit a signal transmission order and an implementation order in the present application.

For **a first node U01,** in step S5101, a first message is received, wherein the first message comprises at least one parameter list, any parameter list among the at least one parameter list comprises a plurality of parameters, and the parameters indicate at least one RS resource; in step S5102, a first parameter is determined, wherein the first parameter is one parameter in a first parameter list, and the first parameter list is one parameter list among the at least one parameter list; in step S5103, the first parameter list is determined; in step S5104, at least one RS resource after determining the first parameter is measured; in step S5105, a second message is sent, in response to a first condition being satisfied, and the second message comprises a measurement result for the at least one RS resource; in step S5106, a third message is sent, wherein the third message indicates the first parameter; in step S5107, a fourth message is received, wherein the fourth message indicates that the first parameter is applied; and in step S5108, a spatial filter of the RS resource indicated by the first parameter is applied to wireless transmission.

For **a second node N02,** in step S5201, the first message is sent; in step S5202, the second message is received; in step S5203, the third message is received; and in step S5204, the fourth message is sent.

In Embodiment 5, a determination of the first parameter depends on at least a measurement for the RS resource indicated by the first parameter and a position of the first parameter in the first parameter list; and the determination of the first parameter depends on at least the measurement for the RS resource indicated by the first parameter and the position of the first parameter in the first parameter list.

As one embodiment, the first node U01 and the second node N02 are in wireless connection.

As one embodiment, the first node U01 and the second node N02 are in wired connection.

As one embodiment, the first node U01 and the second node N02 are connected through a Uu interface.

As one embodiment, the first node U01 and the second node N02 are connected through an IAB interface.

As one embodiment, the first node U01 and the second node N02 are connected through a PC5 interface.

As one embodiment, the step S5103 is optional.

As one embodiment, the step S5103 exists.

As one sub-embodiment of the above embodiment, the step S5103 follows the step S5102.

As one sub-embodiment of the above embodiment, the step S5103 precedes the step S5102.

As one sub-embodiment of the above embodiment, the step S5103 and the step S5102 are executed concurrently.

As one embodiment, the step S5103 does not exist.

As one embodiment, a dotted-line block F5.1 is optional.

As one embodiment, the dotted-line block F5.1 exists.

As one sub-embodiment of the above embodiment, the phrase "after determining the first parameter" comprises: before the spatial filter of the RS resource indicated by the first parameter is applied to the wireless transmission.

As one sub-embodiment of the above embodiment, the phrase "after determining the first parameter" does not comprise: before the spatial filter of the RS resource indicated by the first parameter is applied to the wireless transmission.

As one sub-embodiment of the above embodiment, the phrase "after determining the first parameter" comprises: during a period when the spatial filter of the RS resource indicated by the first parameter is applied to the wireless transmission.

As one sub-embodiment of the above embodiment, the second message is one measurement report.

As one sub-embodiment of the above embodiment, the second message is one RRC message.

As one sub-embodiment of the above embodiment, the second message is transmitted through a PUCCH.

As one sub-embodiment of the above embodiment, the second message is one piece of Uplink Control Information (UCI).

As one sub-embodiment of the above embodiment, the second message is transmitted through a PUSCH.

As one sub-embodiment of the above embodiment, the second message is one MAC Control Element (CE).

As one sub-embodiment of the above embodiment, the second message belongs to one MAC CE.

As one sub-embodiment of the above embodiment, the phrase "the first condition depends on the measurement result for the at least one RS resource" means that: the first condition being satisfied comprises a result of a measurement for the at least one RS resource being satisfied.

As one sub-embodiment of the above embodiment, the first condition being satisfied comprises the result of the measurement for the at least one RS resource being better than or not worse than a target threshold.

As one sub-embodiment of the above embodiment, the target threshold is preconfigured.

As one embodiment, the phrase "the first condition depends on the cell identities with which the RS resources indicated by a plurality of parameters in the first parameter list are associated" means that: the first condition being satisfied comprises the cell identities with which the RS resources indicated by a plurality of parameters in the first parameter list are associated being not less than one threshold; and the one threshold is an integer not less than 2.

As one embodiment, the phrase "the first condition depends on the cell identities with which the RS resources indicated by a plurality of parameters in the first parameter list are associated" means that: the first condition being satisfied comprises the cell identities with which the RS resources indicated by a plurality of parameters in the first parameter list are associated being configured to the same serving cell.

As one sub-embodiment of the above embodiment, the cell identities with which the RS resources indicated by a plurality of parameters in the first parameter list are associated are configured in the same ServingCellConfig IE; the same ServingCellConfig IE is used for configuring the same serving cell; and the cell identities are PCIs.

As one embodiment, the phrase "the first condition depends on the cell identities with which the RS resources indicated by a plurality of parameters in the first parameter list are associated" means that: the first condition depends on the cell identities with which the at least one RS resource in the first parameter list are associated; and the at least one RS resource belongs to the RS resources indicated by the plurality of parameters in the first parameter list.

As one sub-embodiment of the above embodiment, the first condition being satisfied comprises the cell identity associated with the at least one RS resource in the first parameter list being different from the cell identity associated with the RS resource indicated by the first parameter.

As one embodiment, the first condition being satisfied means that: the result of the measurement for the at least one RS resource in the first parameter list is better than or not worse than the target threshold, wherein, the cell identity associated with the at least one RS resource in the first parameter list is different from the cell identity associated with the RS resource indicated by the first parameter.

As one embodiment, the cell identity is ServCellIndex.

As one embodiment, the cell identity is a Physical Cell Identity (PCI).

As one embodiment, the cell identity is a configuration identifier.

As one embodiment, the cell identity is a logic identifier.

As one embodiment, the dotted-line block F5.1 does not exist.

As one embodiment, a dotted-line block F5.2 is optional.

As one embodiment, the dotted-line block F5.2 exists.

As one sub-embodiment of the above embodiment, the third message is one measurement report.

As one sub-embodiment of the above embodiment, the third message is one RRC message.

As one sub-embodiment of the above embodiment, the third message is triggered by a Beam Failure Recovery (BFR).

As one sub-embodiment of the above embodiment, the third message is triggered by the behavior determining the first parameter.

As one sub-embodiment of the above embodiment, the third message is one HARQ ACK.

As one sub-embodiment of the above embodiment, the third message is transmitted through a PUCCH.

As one sub-embodiment of the above embodiment, the third message is one piece of UCI.

As one sub-embodiment of the above embodiment, the third message is transmitted through a PUSCH.

As one sub-embodiment of the above embodiment, the third message is one MAC CE.

As one sub-embodiment of the above embodiment, the third message belongs to one MAC CE.

As one sub-embodiment of the above embodiment, the third message belongs to one BFR MAC CE.

As one sub-embodiment of the above embodiment, the third message is transmitted through a Physical Random Access Channel (PRACH).

As one sub-embodiment of the above embodiment, the third message is sent on a PRACH.

As one sub-embodiment of the above embodiment, the third message is associated with the first parameter.

As one sub-embodiment of the above embodiment, the third message indicates an index of the first parameter.

As one sub-embodiment of the above embodiment, the third message indicates an index of the RS resource indicated by the first parameter.

As one sub-embodiment of the above embodiment, the third message indicates the position of the first parameter in the first parameter list.

As one sub-embodiment of the above embodiment, a Candidate RS ID field in the third message is set to the RS resource indicated by the first parameter.

As one sub-embodiment of the above embodiment, the third message indicates that the RS resource indicated by the first parameter is a candidate RS resource.

As one embodiment, the dotted-line block F5.2 does not exist.

As one embodiment, a dotted-line block F5.3 is optional.

As one embodiment, the dotted-line block F5.3 exists.

As one sub-embodiment of the above embodiment, the fourth message explicitly indicates a time when the first parameter is applied.

As one sub-embodiment of the above embodiment, the time when the first parameter is applied depends on a reception time of the fourth message.

As one sub-embodiment of the above embodiment, the first parameter is applied after a specified positive integer number of symbols since the reception time of the fourth message.

As one sub-embodiment of the above embodiment, the behavior determining the first parameter comprises monitoring the fourth message.

As one sub-embodiment of the above embodiment, the behavior determining the first parameter comprises receiving the fourth message.

As one sub-embodiment of the above embodiment, the behavior determining the first parameter comprises determining the first parameter according to the fourth message.

As one sub-embodiment of the above embodiment, the fourth message indicates an index of the first parameter.

As one sub-embodiment of the above embodiment, the fourth message indicates an index of the RS resource indicated by the first parameter.

As one sub-embodiment of the above embodiment, the fourth message indicates a target RS resource of the RS resource indicated by the first parameter.

As one sub-embodiment of the above embodiment, the fourth message is transmitted through a PDCCH.

As one sub-embodiment of the above embodiment, the fourth message is one piece of PDCCH transmission.

As one sub-embodiment of the above embodiment, the fourth message is one piece of Downlink Control Information (DCI).

As one sub-embodiment of the above embodiment, the fourth message is one piece of DCI identified by a Cell (C)-Radio Network Temporary Identifier (RNTI) of the first node U01, and the fourth message schedules new transmission.

As one sub-embodiment of the above embodiment, the fourth message schedules a PUSCH.

As one sub-embodiment of the above embodiment, the fourth message is transmitted through a PDSCH.

As one sub-embodiment of the above embodiment, the fourth message is one RRC message.

As one sub-embodiment of the above embodiment, the fourth message is one MAC CE.

As one sub-embodiment of the above embodiment, the fourth message comprises a Transmission Configuration Indicator (TCI) state indication.

As one embodiment, the dotted-line block F5.3 does not exist.

As one embodiment, the third message is triggered by the BFR, the fourth message follows the third message, and the fourth message is triggered by the third message.

As one embodiment, the fourth message precedes the third message, the fourth message is one piece of DCI, the third message comprises an HARQ-ACK for the fourth message, and a start time at which the first parameter is applied depends on a sending time of the third message.

As one embodiment, the at least one parameter list comprises a plurality of parameter lists, and a determination of the first parameter list depends on measurements for RS resources indicated by a plurality of parameters in the first parameter list.

As one sub-embodiment of the above embodiment, the determination of the first parameter list precedes the determination of the first parameter.

As one sub-embodiment of the above embodiment, at least one parameter in the plurality of parameter lists does not belong to the first parameter list, and reception quality of the RS resource indicated by the parameter is better than reception quality of an RS resource indicated by any parameter in the first parameter list.

As one sub-embodiment of the above embodiment, the behavior determining the first parameter list follows a second parameter being applied, and a condition for the behavior determining the first parameter list comprises: for any parameter list other than the first parameter list among the plurality of parameter lists, there is no parameter list in which reception quality of an RS resource indicated by Q2 parameters is better than the reception quality of the RS resource indicated by any parameter in the first parameter list, and Q2 is a positive integer greater than 1.

As one sub-embodiment of the above embodiment, for any two parameters among the Q2 parameters, the parameter list comprises no more than Q3 parameters between the any two parameters, and Q3 is a configurable positive integer.

As one sub-embodiment of the above embodiment, the Q2 parameters are in consecutive positions within the parameter list.

As one sub-embodiment of the above embodiment, Q2 is configurable.

As one sub-embodiment of the above embodiment, Q2 is specific to a parameter list.

As one sub-embodiment of the above embodiment, for each parameter list among the at least one parameter list, the first message is configured with one positive integer, and Q2 is the positive integer configured to the first parameter list.

The above two embodiments can guarantee good transmission performance and avoid frequent changes between parameter lists.

As one sub-embodiment of the above embodiment, the behavior determining the first parameter list follows the second parameter being applied, and the condition for the behavior determining the first parameter list comprises: for any parameter list other than the first parameter list among the plurality of parameter lists, there is no parameter list in which the reception quality of the RS resource indicated by the parameter exceeds a specific quality threshold compared with the reception quality of the RS resource indicated by any parameter in the first parameter list, and Q2 is a positive integer greater than 1.

As one sub-embodiment of the above embodiment, the specific quality threshold is configurable.

As one sub-embodiment of the above embodiment, the specific quality threshold is specific to a parameter list.

As one sub-embodiment of the above embodiment, the behavior determining the first parameter list comprises: sending uplink signaling, and the uplink signaling indicating the first parameter list.

As one sub-embodiment of the above embodiment, the behavior determining the first parameter list comprises: receiving downlink signaling, and the downlink signaling confirming that the first parameter list is adopted.

As one sub-embodiment of the above embodiment, the downlink signaling is triggered by the uplink signaling.

As one sub-embodiment of the above embodiment, the reception quality comprises RSRP.

As one sub-embodiment of the above embodiment, the reception quality comprises RSRQ.

As one sub-embodiment of the above embodiment, the reception quality comprises a BLER.

As one embodiment, the at least one parameter list comprises a plurality of parameter lists, and the determination of the first parameter list depends on the measurements for the RS resources indicated by the plurality of parameters in the first parameter list; the plurality of parameter lists comprise the second parameter; and the first parameter list is one of the plurality of parameter lists, and the determination of the first parameter list is performed after the determination of the first parameter.

As one embodiment, the first condition depends on the measurement result for the at least one RS resource, at least two parameters in the first parameter list indicate RS resources associated with different cell identities, and the first condition depends on the cell identities with which the RS resources indicated by a plurality of parameters in the first parameter list are associated.

### Embodiment 6

Embodiment 6 illustrates a schematic diagram of a determination of a first parameter depending on a position of a second parameter in a first parameter list according to one embodiment of the present application.

In Embodiment 6, the determination of the first parameter depends on the position of the second parameter in the first parameter list; and before the first parameter is applied, a spatial filter of an RS resource indicated by the second parameter is applied to wireless transmission.

As one embodiment, the second parameter is one parameter in the first parameter list.

As one embodiment, the phrase "before the first parameter is applied" comprises: within at least a time interval before the first parameter is applied.

As one embodiment, the phrase "before the first parameter is applied" comprises: before the behavior applying a spatial filter of an RS resource indicated by the first parameter to the wireless transmission.

As one embodiment, the phrase "before the first parameter is applied" comprises: within at least a time interval before the first parameter is determined.

As one embodiment, the determination of the first parameter depends on a measurement for an RS resource indicated by the first parameter, the determination of the first parameter depends on a position of the first parameter in the first parameter list, and the determination of the first parameter depends on the position of the second parameter in the first parameter list; and before the first parameter is applied, the spatial filter of the RS resource indicated by the second parameter is applied to the wireless transmission.

As one embodiment, the determination of the first parameter depends on the measurement for the RS resource indicated by the first parameter, a measurement for an RS resource indicated by the second parameter, the position of the first parameter in the first parameter list and the position of the second parameter in the first parameter list; and before the first parameter is applied, the spatial filter of the RS resource indicated by the second parameter is applied to the wireless transmission.

As one embodiment, the position of the first parameter in the first parameter list is adjacent to the position of the second parameter in the first parameter list; and the determination of the first parameter depends on the position of the first parameter in the first parameter list being adjacent to the position of the second parameter in the first parameter list.

As one embodiment, the first parameter in the first parameter list follows the second parameter in the first parameter list; and the determination of the first parameter depends on the first parameter in the first parameter list following the second parameter in the first parameter list.

As one embodiment, the first parameter in the first parameter list immediately follows the second parameter in the first parameter list; and the determination of the first parameter depends on the first parameter in the first parameter list immediately following the second parameter in the first parameter list.

As one embodiment, the first parameter in the first parameter list immediately follows the second parameter in the first parameter list; and the determination of the first parameter depends on the first parameter in the first parameter list immediately following the second parameter in the first parameter list.

### Embodiment 7

Embodiment 7 illustrates a schematic diagram in which no more than Q1 parameters are between a position of a candidate for a first parameter in a first parameter list and a position of a second parameter in the first parameter list according to one embodiment of the present application.

In Embodiment 7, no more than Q1 parameters are between the position of the candidate for the first parameter in the first parameter list and the position of the second parameter in the first parameter list; and the first parameter list is composed of more than Q1 parameters, and Q1 is a non-negative integer.

As one embodiment, a determination of the first parameter depends on no more than Q1 parameters being between a position of the first parameter in the first parameter list and the position of the second parameter in the first parameter list.

As one embodiment, a position of any candidate for the first parameter in the first parameter list precedes the position of the second parameter in the first parameter list.

As one embodiment, the position of any candidate for the first parameter in the first parameter list follows the position of the second parameter in the first parameter list.

As one embodiment, the position of any candidate for the first parameter in the first parameter list precedes or follows the position of the second parameter in the first parameter list.

As one embodiment, any candidate for the first parameter is one parameter among Q1 consecutive parameters preceding the second parameter in the first parameter list.

As one embodiment, any candidate for the first parameter is one parameter among Q1 consecutive parameters following the second parameter in the first parameter list.

As one embodiment, any candidate for the first parameter is one parameter among Q1 consecutive parameters preceding the second parameter and among Q1 consecutive parameters following the second parameter in the first parameter list.

As one embodiment, any candidate for the first parameter is one parameter among Q1-1 consecutive parameters preceding the second parameter in the first parameter list.

As one embodiment, any candidate for the first parameter is one parameter among Q1-1 consecutive parameters following the second parameter in the first parameter list.

As one embodiment, any candidate for the first parameter is one parameter among Q1-1 consecutive parameters preceding the second parameter and among Q1-1 consecutive parameters following the second parameter in the first parameter list.

As one embodiment, Q1 is configurable.

As one embodiment, Q1 is default.

As one embodiment, Q1 is 0.

As one embodiment, Q1 is 1.

As one embodiment, Q1 is 2.

As one embodiment, Q1 is specific to a parameter list.

As one embodiment, for each parameter list among the at least one parameter list, a first message is configured with one threshold, and Q1 is a threshold configured to the first parameter list.

The above two embodiments can flexibly control the candidate for the first parameter, especially considering that the RS resources indicated by different parameter lists may have different spatial characteristics, such as beamwidth, and spatial domain oversampling.

### Embodiment 8

Embodiment 8 illustrates a schematic diagram in which a measurement result for an RS resource indicated by a first parameter is better than or not worse than a first threshold according to one embodiment of the present application.

In Embodiment 8, the measurement result for the RS resource indicated by the first parameter is better than or not worse than the first threshold, and the first threshold depends on a position of the first parameter in the first parameter list.

As one embodiment, a determination of the first parameter depending on a measurement for an RS resource indicated by the first parameter means that: the determination of the first parameter depends on the measurement result for the RS resource indicated by the first parameter being better than or not worse than the first threshold.

As one embodiment, the phrase "the determination of the first parameter depends on at least the measurement for the RS resource indicated by the first parameter and the position of the first parameter in the first parameter list" means that: the determination of the first parameter depends on the measurement result for the RS resource indicated by the first parameter being better than or not worse than the first threshold, and the first threshold depends on the position of the first parameter in the first parameter list.

As one embodiment, the behavior determining the first parameter comprises: determining that the measurement result for the RS resource indicated by the first parameter satisfies the first threshold, and the first threshold is configurable.

As one embodiment, the "better than" is "greater than", and the "not worse than" is "not less than".

As one embodiment, the "better than" is "less than", and the "not worse than" is "not greater than".

As one embodiment, the measurement result for the RS resource indicated by the first parameter is better than the first threshold.

As one embodiment, the measurement result for the RS resource indicated by the first parameter is not worse than the first threshold.

As one embodiment, the measurement result for the RS resource indicated by the first parameter is an L1 measurement result.

The above method shortens the delay.

The above method avoids delayed switching.

As one embodiment, the measurement result for the RS resource indicated by the first parameter is a BLER.

As one embodiment, the measurement result for the RS resource indicated by the first parameter is L1-RSRP.

As one embodiment, the measurement result for the RS resource indicated by the first parameter is SS-RSRP.

As one embodiment, the measurement result for the RS resource indicated by the first parameter is CSI-RSRP.

As one embodiment, the measurement result for the RS resource indicated by the first parameter is an L3 measurement result.

The above method improves the reliability of the measurement result.

As one embodiment, the phrase "the first threshold depends on the position of the first parameter in the first parameter list" means that: the position of the first parameter in the first parameter list indicates the first threshold.

As one sub-embodiment of the embodiment, the indication refers to being used for determination.

As one sub-embodiment of the embodiment, the indication refers to association.

As one sub-embodiment of the embodiment, the indication refers to correspondence.

As one embodiment, the phrase "the first threshold depends on the position of the first parameter in the first parameter list" means that: the first threshold is determined according to the position of the first parameter in the first parameter list.

As one embodiment, the measurement result for the RS resource indicated by the first parameter is better than or not worse than the first threshold, and the first threshold depends on the position of the first parameter in the first parameter list and a position of a second parameter in the first parameter list.

As one embodiment, the measurement result for the RS resource indicated by the first parameter is better than the first threshold; and, a measurement result for the RS resource indicated by the second parameter is not better than a second threshold, and the first threshold depends on the position of the first parameter in the first parameter list; and, the second threshold depends on the position of the second parameter in the first parameter list.

As one embodiment, the measurement result for the RS resource indicated by the first parameter is not worse than the first threshold; and, the measurement result for the RS resource indicated by the second parameter is worse than the second threshold, and the first threshold depends on the position of the first parameter in the first parameter list; and, the second threshold depends on the position of the second parameter in the first parameter list.

As one embodiment, the measurement result for the RS resource indicated by the first parameter is better than the first threshold; and, the measurement result for the RS resource indicated by the second parameter is not better than the second threshold, and the first threshold depends on the position of the first parameter in the first parameter list; and, the second threshold depends on a position of the second parameter in a second parameter list.

As one embodiment, the measurement result for the RS resource indicated by the first parameter is not worse than the first threshold; and, the measurement result for the RS resource indicated by the second parameter is worse than the second threshold, and the first threshold depends on the position of the first parameter in the first parameter list; and, the second threshold depends on the position of the second parameter in the second parameter list.

As one embodiment, the measurement result for the RS resource indicated by the second parameter is worse than or not better than the second threshold.

As one embodiment, the measurement result for the RS resource indicated by the second parameter is worse than the second threshold.

As one embodiment, the measurement result for the RS resource indicated by the second parameter is not better than the second threshold.

As one embodiment, the measurement result for the RS resource indicated by the second parameter is the L1 measurement result.

The above method shortens the delay.

The above method avoids delayed switching.

As one embodiment, the measurement result for the RS resource indicated by the second parameter is L1-RSRP.

As one embodiment, the measurement result for the RS resource indicated by the second parameter is SS-RSRP.

As one embodiment, the measurement result for the RS resource indicated by the second parameter is CSI-RSRP.

As one embodiment, the measurement result for the RS resource indicated by the second parameter is the L3 measurement result.

The above method improves the reliability of the measurement result.

### Embodiment 9

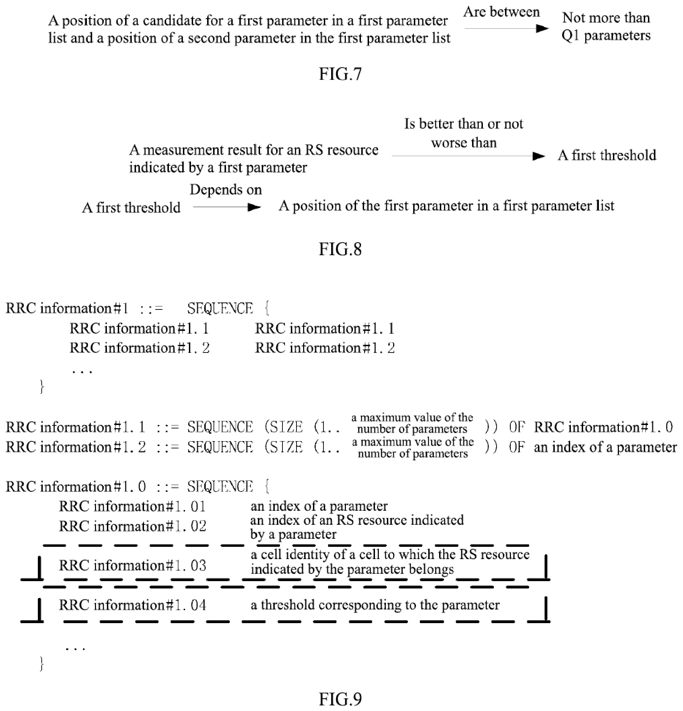

Embodiment 9 illustrates a schematic diagram of using ASN.1 to configure one parameter list according to one embodiment of the present application. In FIG. 9, an RRC information block #1.1 is used for adding or modifying parameters in one parameter list; an RRC information block #1.2 is used for deleting parameters in one parameter list; and an RRC information block #1.0 is used for configuring one parameter in one parameter list.

As one embodiment, a first message comprises at least one RRC information block #1, the at least one RRC information block #1 configures a first parameter list, one RRC information block #1.0 in the at least one RRC information block #1 configures a first parameter, and another RRC information block #1.0 in the at least one RRC information block #1 configures a second parameter.

As one embodiment, the first message comprises the at least one RRC information block #1, the at least one RRC information block #1 configures at least the first parameter list and a second parameter list, one RRC information block #1.0 of the at least one RRC information block #1 that configures the first parameter list configures the first parameter, and one RRC information block #1.0 of the at least one RRC information block #1 that configures the second parameter list configures the second parameter.

As one embodiment, the one RRC information block #1 configures one parameter list.

As one embodiment, the RRC information block #1 is one RRC IE.

As one embodiment, the RRC information block #1 is one RRC field.

As one embodiment, the RRC information block #1 comprises only the RRC information block #1.1 and the RRC information block #1.2.

As one embodiment, the RRC information block #1 comprises at least one RRC information block other than the RRC information block #1.1 and the RRC information block #1.2.

As one embodiment, the RRC information block #1 configures one parameter list.

As one embodiment, the RRC information block #1 configures at least one parameter list.

As one embodiment, the RRC information block #1.0 is one RRC IE.

As one embodiment, the RRC information block #1.0 is one RRC field.

As one embodiment, the RRC information block #1.0 only comprises at least an RRC information block #1.02 of an RRC information block #1.01, the RRC information block #1.02, an RRC information block #1.03 and an RRC information block #1.04.

As one embodiment, the RRC information block #1.0 only comprises at least the first two of the RRC information block #1.01, the RRC information block #1.02, the RRC information block #1.03 and the RRC information block #1.04.

As one embodiment, the RRC information block #1.0 comprises at least one RRC information block other than the RRC information block #1.01, the RRC information block #1.02, the RRC information block #1.03 and the RRC information block #1.04.

As one embodiment, a data structure of the RRC information block #1.0 may also be a data structure other than SEQUENCE.

As one embodiment, the data structure of the RRC information block #1.0 may also be CHOICE.

As one embodiment, the RRC information block #1.1 is one RRC IE.

As one embodiment, the RRC information block #1.1 is one RRC field.

As one embodiment, a name of the RRC information block #1.1 comprises ToAddModList.

As one embodiment, the RRC information block #1.2 is one RRC IE.

As one embodiment, the RRC information block #1.2 is one RRC field.

As one embodiment, a name of the RRC information block #1.2 comprises ToRemoveList.

As one embodiment, a name of the RRC information block #1 comprises list.

As one embodiment, the RRC information block #1.01 exists.

As one sub-embodiment of the above embodiment, the RRC information block #1.01 is one RRC IE.

As one sub-embodiment of the above embodiment, the RRC information block #1.01 is one RRC field.

As one sub-embodiment of the above embodiment, the RRC information block #1.01 configures an index of one parameter in one parameter list.

As one sub-embodiment of the above embodiment, a name of the RRC information block #1.01 comprises Id.

As one embodiment, the RRC information block #1.01 does not exist.

As one embodiment, the RRC information block #1.02 is one RRC IE.

As one embodiment, the RRC information block #1.02 is one RRC field.

As one embodiment, the RRC information block #1.02 configures an index of an RS resource indicated by one parameter in one parameter list.

As one embodiment, a data structure of the RRC information block #1.02 is SEQUENCE.

As one embodiment, the data structure of the RRC information block #1.02 is CHOICE.

As one embodiment, a name of the RRC information block #1.02 comprises TCI-State.

As one embodiment, the name of the RRC information block #1.02 comprises one TCI-State IE, and the one TCI-State IE configures an index of an RS resource indicated by one parameter in one parameter list.

As one embodiment, the name of the RRC information block #1.02 comprises one TCI-StateId IE, and TCI-State indicated by the one TCI-StateId IE configures an index of an RS resource indicated by one parameter in one parameter list.

As one embodiment, the name of the RRC information block #1.02 comprises ssb.

As one embodiment, the name of the RRC information block #1.02 comprises csi-RS.

As one embodiment, the name of the RRC information block #1.02 comprises resource.

As one embodiment, the name of the RRC information block #1.02 comprises Config.

As one embodiment, the name of a field in the RRC information block #1.02 comprises ssb.

As one embodiment, the name of a field in the RRC information block #1.02 comprises csi-RS.

As one embodiment, a name of one field in the RRC information block #1.02 comprises resource.

As one embodiment, a value of one field in the RRC information block #1.02 is SSB-Index.

As one embodiment, the value of one field in the RRC information block #1.02 is NZP-CSI-RS-ResourceId.

As one embodiment, a value of the RRC information block #1.02 comprises a cell identity with which the RS resource indicated by the one parameter is associated.

As one embodiment, the RRC information block #1.03 exists.

As one sub-embodiment of the above embodiment, the RRC information block #1.03 is one RRC IE.

As one sub-embodiment of the above embodiment, the RRC information block #1.03 is one RRC field.

As one sub-embodiment of the above embodiment, the RRC information block #1.03 configures a threshold corresponding to one parameter in one parameter list.

As one sub-embodiment of the above embodiment, a data structure of the RRC information block #1.03 is SEQUENCE.

As one sub-embodiment of the above embodiment, the data structure of the RRC information block #1.03 is CHOICE.

As one sub-embodiment of the above embodiment, the data structure of the RRC information block #1.03 is ENUMERATED.

As one sub-embodiment of the above embodiment, the data structure of the RRC information block #1.03 is INTEGER.

As one embodiment, the RRC information block #1.03 does not exist.

As one embodiment, the FIG. 9 merely indicates one feasible implementation of using ASN.1 to configure one parameter list, and does not limit the specific implementation of the parameter list in the present application.

As one embodiment, the implementation of using ASN.1 to configure one parameter list as shown in the FIG. 9 can achieve addition, modification, and deletion of parameters in one parameter list.

As one embodiment, the implementation of using ASN.1 to configure a parameter list as shown in the FIG. 9 makes the maintenance of one parameter list more flexible.

As one embodiment, the implementation of using ASN.1 to configure a parameter list as shown in the FIG. 9 makes the configuration of one parameter list more flexible.

As one embodiment, the Embodiment 9 is one preferred embodiment of using ASN.1 to configure a parameter list, and the embodiment does not limit other ASN.1 implementations of parameter lists in the present application to achieve effects equivalent to those of the FIG. 9.

### Embodiment 10

Embodiment 10 illustrates a schematic diagram of using ASN.1 to configure one parameter list according to another embodiment of the present application. In FIG. 9, an RRC information block #1.1 is used for adding or modifying one parameter.

As one embodiment, a first message comprises an RRC information block #1, the RRC information block #1 configures a first parameter list, an RRC information block #1.0 in the RRC information block #1 configures a first parameter, and the another RRC information block #1.0 in the RRC information block #1 configures a second parameter.

As one embodiment, the first message comprises the at least one RRC information block #1; the RRC information block #1 in the at least one RRC information block #1 configures the first parameter list, and the RRC information blocks #1.0 in the RRC information block #1 in the at least one RRC information block #1 configures the first parameter; and the another RRC information block #1 in the at least one RRC information block #1 configures a second parameter list, and the RRC information block #1.0 in the another RRC information block #1 in the at least one RRC information block #1 configures the second parameter.

As one embodiment, the one RRC information block #1 configures one parameter list.

As one embodiment, a name of the RRC information block #1 comprises List.

As one embodiment, the RRC information block #1 is one RRC IE.

As one embodiment, the RRC information block #1 is one RRC field.

As one embodiment, the RRC information block #1.0 is one RRC IE.

As one embodiment, the RRC information block #1.0 is one RRC field.

As one embodiment, the RRC information block #1.0 only comprises at least the former of an RRC information block #1.02, an RRC information block #1.03, and an RRC information block #1.04.

As one embodiment, the RRC information block #1.0 comprises at least one RRC information block other than the RRC information block #1.02, the RRC information block #1.03, and the RRC information block #1.04.

As one embodiment, a data structure of the RRC information block #1.0 may also be a data structure other than SEQUENCE.

As one embodiment, the data structure of the RRC information block #1.0 may also be CHOICE.

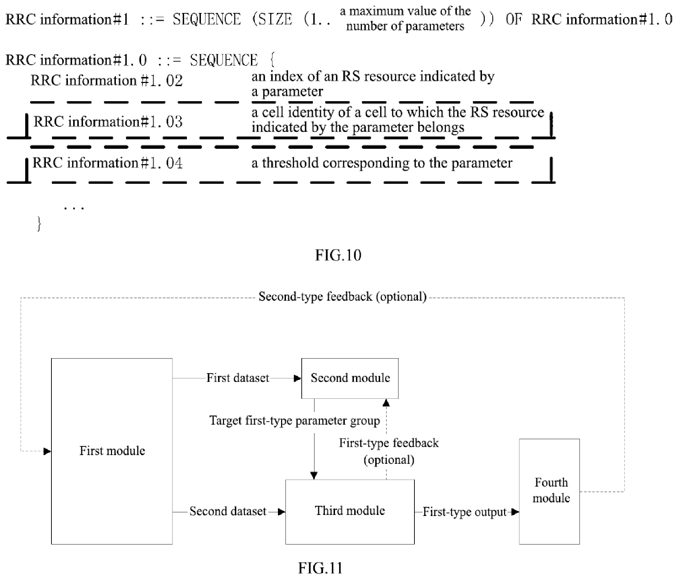

As one embodiment, the RRC information block #1.02 in the FIG. 10 refers to the RRC information block #1.02 in the FIG. 9.

As one embodiment, the RRC information block #1.03 in the FIG. 10 refers to the RRC information block #1.03 in the FIG. 9.

As one embodiment, the RRC information block #1.04 in the FIG. 10 refers to the RRC information block #1.04 in the FIG. 9.

As one embodiment, the FIG. 10 merely indicates one feasible implementation of using ASN.1 to configure one parameter list, and does not limit the specific implementation of the parameter list in the present application.

As one embodiment, compared with the implementation of using ASN.1 to configure one parameter list as shown in the FIG. 9, the implementation of using ASN.1 to configure one parameter list as shown in the FIG. 10 makes the configuration of one parameter list simpler.

As one embodiment, compared with the implementation of using ASN.1 to configure one parameter list as shown in the FIG. 9, the implementation of using ASN.1 to configure one parameter list as shown in the FIG. 10 avoids the impact of selection of modifying and deleting parameters in one parameter list.

As one embodiment, the Embodiment 10 is one preferred embodiment of using ASN.1 to configure one parameter list, and the embodiment does not limit other ASN.1 implementations of parameter lists in the present application to achieve effects equivalent to those of the FIG. 10.

### Embodiment 11

Embodiment 11 illustrates a schematic diagram of an artificial intelligence processing system according to one embodiment of the present application, as shown in FIG. 11. FIG. 11 comprises a first module, a second module, a third module and a fourth module.

In Embodiment 11, the first module sends a first dataset to the second module, the second module generates a target first-type parameter group according to the first dataset, the second module sends the generated target first-type parameter group to the third module, and the third module processes a second dataset using the target first-type parameter group to obtain a first-type output, and then sends the first-type output to the fourth module.

As one embodiment, the first module, the second module, the third module and the fourth module all belong to a first node.

The above method avoids air interface signaling interaction and shortens transmission delay.

As one embodiment, the first module, the second module, the third module and the fourth module all belong to a second node.

The above method reduces the hardware complexity of the first node and shortens transmission delay compared with OAM.

As one embodiment, the first module, the second module, the third module and the fourth module all belong to OAM to which the second node belongs.

The above method reduces the hardware complexity of the first node and improves the accuracy of the first-type output compared with the second node.

As one embodiment, the first module, the second module, the third module and the fourth module belong to the first node and the second node.

As one embodiment, the first module belongs to the first node, and the second module, the third module and the fourth module all belong to the second node.

The above method balances the hardware complexity and transmission delay of the first node.

As one embodiment, the first module, the second module, the third module and the fourth module belong to OAM to which the first node and the second node belong.

As one embodiment, the first module belongs to the first node, and the second module, the third module and the fourth module all belong to the OAM to which the second node belongs.

The above method balances the hardware complexity of the first node and the accuracy of the first-type output.

As one embodiment, the first module, the second module, the third module and the fourth module belong to the second node and the OAM to which the second node belongs.

The above method balances transmission delay and the accuracy of the first-type output.

As one embodiment, the first module is used for data collection.

As one embodiment, the first module generates at least one of the first dataset or the second dataset according to at least a measurement of the first node.

As one embodiment, the first module generates at least one of the first dataset or the second dataset according to at least a measurement for an RS resource indicated by a first parameter.

As one embodiment, the first module generates at least one of the first dataset or the second dataset according to at least the measurement for the RS resource indicated by the first parameter and a measurement for an RS resource indicated by a second parameter.

As one embodiment, the first module receives measurement results from at least one piece of UE; and the first module belongs to the second node or the first module belongs to the OAM to which the second node belongs.

As one embodiment, the first module receives measurement results from at least one network entity; and the first module belongs to the second node or the first module belongs to the OAM to which the second node belongs.

As one embodiment, the first module sends a measurement result of the first node; and the first module belongs to the first node.

As one embodiment, at least one of the first dataset or the second dataset is transmitted through a Uu interface.

As one embodiment, at least one of the first dataset or the second dataset is transmitted through an intermodule interface.

As one embodiment, at least one of the first dataset or the second dataset comprises a measurement result for an RS resource indicated by the first parameter.

As one embodiment, at least one of the first dataset or the second dataset comprises the measurement result for the RS resource indicated by the first parameter and a measurement result for an RS resource indicated by the second parameter.

As one embodiment, at least one of the first dataset or the second dataset comprises a measurement result for an RS resource indicated by each parameter in a first parameter list.

As one embodiment, at least one of the first dataset or the second dataset comprises a measurement result for an RS resource indicated by each parameter in the at least one parameter list.

As one embodiment, at least one of the first dataset or the second dataset comprises a movement direction.

As one embodiment, at least one of the first dataset or the second dataset comprises a movement speed.

As one embodiment, at least one of the first dataset or the second dataset comprises a measurement result of a current serving cell of the first node.

As one embodiment, at least one of the first dataset or the second dataset comprises a measurement result of a neighboring cell of a current serving cell of the first node.

As one embodiment, the second module is used for model training.

As one embodiment, the first dataset is training data, the second dataset is inference data, the second module is used for training a model, and the trained model is described by the target first-type parameter group.

As one embodiment, the third module is used for model inference.

As one embodiment, the third module constructs a model according to the target first-type parameter group, then inputs the second dataset into the constructed model to obtain the first-type output, and then sends the first-type output to the fourth module.

As one embodiment, the third module calculates an error between the first-type output and actual data to determine the performance of the trained model; and the actual data is data received after the second dataset and transferred by the first module.

The above embodiments are particularly suitable for predicting related reports.

As one embodiment, the third module sends a first-type feedback to the second module, and the first-type feedback is used for triggering a recalculation or update of the target first-type parameter group.

As one embodiment, the third module recovers a reference dataset according to the first-type output, and an error between the reference dataset and the second dataset is used for generating the first-type feedback.

As one embodiment, the first-type feedback is used for reflecting the performance of the trained model; and when the performance of the trained model cannot satisfy requirements, the second module recalculates the target first-type parameter group.

As one sub-embodiment of the above embodiment, the third module comprises a first reference decoder of the present application, and the first reference decoder is described by the target first-type parameter group. An input of the first reference decoder comprises the first-type output and an output of the first reference decoder comprises the reference dataset.

Typically, when an error is too large or has not been updated for too long, the performance of the trained model is considered to be unable to satisfy the requirements.

As one embodiment, the fourth module is one Actor.

As one embodiment, the fourth module receives the first-type output from the third module.

As one embodiment, the fourth module executes corresponding actions according to the first-type output.

As one embodiment, the fourth module sends a second-type feedback to the first module, and the second-type feedback is used for generating the first dataset or the second dataset, or the second-type feedback is used for triggering the sending of the first dataset or the second dataset.

As one embodiment, the fourth module sends the second-type feedback to the first module, and the second-type feedback is used for triggering an execution of the first-type output; and the second-type feedback comprises a first message.

As one embodiment, the behavior executing the first-type output comprises the behavior determining the first parameter.

As one embodiment, the behavior executing the first-type output comprises the behavior applying a spatial filter of an RS resource indicated by the first parameter to wireless transmission.

As one embodiment, the first-type output comprises the first message.

As one embodiment, the first-type output comprises at least one threshold.

As one embodiment, the first-type output comprises a threshold corresponding to each parameter.

As one embodiment, the first-type output comprises the first parameter list.

As one embodiment, the first-type output comprises the at least one parameter list.

As one embodiment, the first-type output comprises a cell identity associated with an RS resource indicated by each parameter.

As one embodiment, the Embodiment 11 is merely to illustrate that the present application can be used for an artificial intelligence processing system. The embodiment does not limit the application of the present application to non-artificial intelligence processing systems, and the embodiment does not limit the application of the present application to other types of artificial intelligence processing systems to achieve effects comparable to the artificial intelligence processing system shown in FIG. 11.

### Embodiment 12

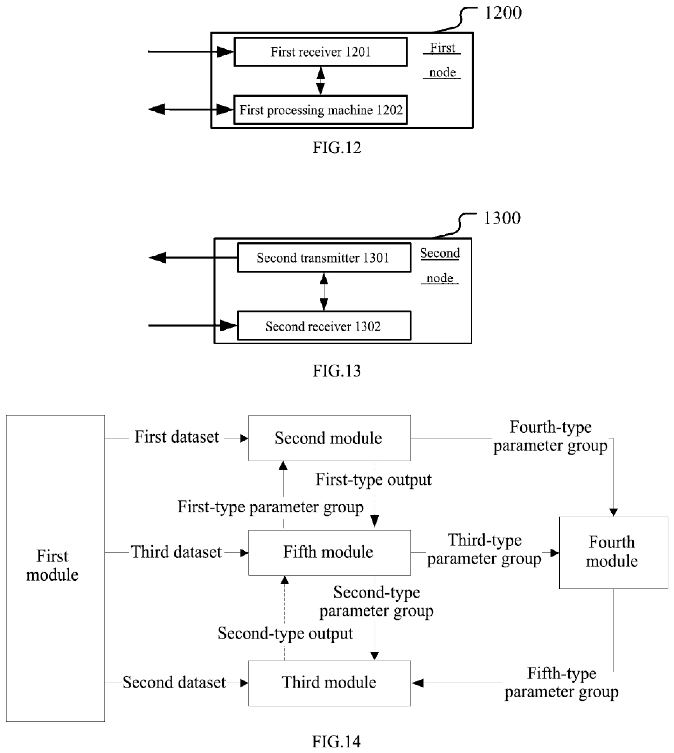

Embodiment 12 illustrates a structural block diagram of a processing device used in a first node according to one embodiment of the present application, as shown in FIG. 12. In FIG. 12, a processing device 1200 in the first node comprises a first receiver 1201 and a first processing machine 1202.

The first receiver 1201 receives a first message, the first message comprises at least one parameter list, any parameter list among the at least one parameter list comprises a plurality of parameters, and the parameters indicate at least one RS resource.

The first processing machine 1202 determines a first parameter, wherein the first parameter is one parameter in a first parameter list, and the first parameter list is one parameter list among the at least one parameter list; and applies a spatial filter of an RS resource indicated by the first parameter to wireless transmission.

In Embodiment 12, a determination of the first parameter depends on at least a measurement for the RS resource indicated by the first parameter and a position of the first parameter in the first parameter list.

As one embodiment, the determination of the first parameter depends on a position of a second parameter in the first parameter list; and before the first parameter is applied, a spatial filter of an RS resource indicated by the second parameter is applied to the wireless transmission.

As one embodiment, no more than Q1 parameters are between a position of a candidate for the first parameter in the first parameter list and the position of the second parameter in the first parameter list; and the first parameter list is composed of more than Q1 parameters, and Q1 is a non-negative integer.

As one embodiment, the first processing machine 1202 determines the first parameter list, wherein the at least one parameter list comprises a plurality of parameter lists, and a determination of the first parameter list depends on measurements for RS resources indicated by a plurality of parameters in the first parameter list; the plurality of parameter lists comprise the second parameter; and the first parameter list is one of the plurality of parameter lists, and the determination of the first parameter list is performed after the determination of the first parameter.

As one embodiment, the first processing machine 1202 determines the first parameter list, wherein the at least one parameter list comprises a plurality of parameter lists, and the determination of the first parameter list depends on the measurements for the RS resources indicated by the plurality of parameters in the first parameter list.

As one embodiment, a measurement result for the RS resource indicated by the first parameter is better than or not worse than a first threshold, and the first threshold depends on the position of the first parameter in the first parameter list.

As one embodiment, the first processing machine 1202 measures at least one RS resource after determining the first parameter; and sends a second message, in response to a first condition being satisfied, the second message comprising a measurement result for the at least one RS resource, wherein the first condition depends on the measurement result for the at least one RS resource, at least two parameters in the first parameter list indicate RS resources associated with different cell identities, and the first condition depends on the cell identities with which the RS resources indicated by a plurality of parameters in the first parameter list are associated.

As one embodiment, the behavior determining the first parameter comprises sending a third message, wherein the third message indicates the first parameter.

As one embodiment, the behavior determining the first parameter comprises receiving a fourth message, and the fourth message indicates that the first parameter is applied.

As one embodiment, the first processing machine 1202 comprises a first transmitter.

As one embodiment, the first processing machine 1202 comprises one receiver and the first transmitter.

As one embodiment, the receiver in the first processing machine 1202 is the first receiver 1201.

As one embodiment, the receiver in the first processing machine 1202 is not the first receiver 1201.

As one embodiment, the first receiver 1201 comprises at least one of an antenna 452, a receiving device 454 or a multi-antenna receiving processor 458 or a receiving processor 456 or a controller/processor 459 or a memory 460 or a data source 467 in FIG. 4 of the present application.

As one embodiment, the first receiver 1201 comprises at least the antenna 452 and the receiving device 454 in FIG. 4 of the present application.

As one embodiment, the first transmitter comprises at least one of the antenna 452 or a transmitting device 454 or a multi-antenna transmitting processor 457 or a transmitting processor 468 or the controller/processor 459 or the memory 460 or the data source 467 in FIG. 4 of the present application.

As one embodiment, the first transmitter comprises at least the antenna 452 and the transmitting device 454 in FIG. 4 of the present application.

### Embodiment 13

Embodiment 13 illustrates a structural block diagram of a processing device used in a second node according to one embodiment of the present application, as shown in FIG. 13. In FIG. 13, a processing device 1300 in the second node comprises a second transmitter 1301 and a second receiver 1302.

The second transmitter 1301 sends a first message, wherein the first message comprises at least one parameter list, any parameter list among the at least one parameter list comprises a plurality of parameters, and the parameters indicate at least one RS resource.

In Embodiment 13, a recipient of the first message determines a first parameter, wherein the first parameter is one parameter in a first parameter list, and the first parameter list is one parameter list among the at least one parameter list; the recipient of the first message applies a spatial filter of the RS resource indicated by the first parameter to wireless transmission; and a determination of the first parameter depends on at least a measurement for the RS resource indicated by the first parameter and a position of the first parameter in the first parameter list.

As one embodiment, the determination of the first parameter depends on a position of a second parameter in the first parameter list; and before the first parameter is applied, a spatial filter of the RS resource indicated by the second parameter is applied to the wireless transmission.

As one embodiment, no more than Q1 parameters are between a position of a candidate for the first parameter in the first parameter list and the position of the second parameter in the first parameter list; and the first parameter list is composed of more than Q1 parameters, and Q1 is a non-negative integer.

As one embodiment, the recipient of the first message determines the first parameter list, wherein the at least one parameter list comprises a plurality of parameter lists, and a determination of the first parameter list depends on measurements for RS resources indicated by a plurality of parameters in the first parameter list; the plurality of parameter lists comprise the second parameter; and the first parameter list is one of the plurality of parameter lists, and the determination of the first parameter list is performed after the determination of the first parameter.

As one embodiment, the recipient of the first message determines the first parameter list, wherein the at least one parameter list comprises a plurality of parameter lists, and the determination of the first parameter list depends on the measurements for the RS resources indicated by the plurality of parameters in the first parameter list.

As one embodiment, a measurement result for the RS resource indicated by the first parameter is better than or not worse than a first threshold, and the first threshold depends on the position of the first parameter in the first parameter list.

As one embodiment, the recipient of the first message measures at least one RS resource after determining the first parameter; in response to a first condition being satisfied, the recipient of the first message sends a second message, and the second message comprises a measurement result for the at least one RS resource, wherein the first condition depends on the measurement result for the at least one RS resource, at least two parameters in the first parameter list indicate RS resources associated with different cell identities, and the first condition depends on the cell identities with which the RS resources indicated by a plurality of parameters in the first parameter list are associated.

As one embodiment, the second receiver 1302 receives a third message, wherein the behavior determining the first parameter comprises sending the third message, wherein the third message indicates the first parameter.

As one embodiment, the second transmitter 1301 sends a fourth message, wherein the behavior determining the first parameter comprises receiving the fourth message, and the fourth message indicates that the first parameter is applied.

As one embodiment, the second transmitter 1301 comprises at least one of an antenna 420 or a transmitting device 418 or a multi-antenna transmitting processor 471 or a transmitting processor 416 or a controller/processor 475 or a memory 476 in FIG. 4 of the present application.

As one embodiment, the second transmitter 1301 comprises at least the antenna 420 and the transmitting device 418 in FIG. 4 of the present application.

As one embodiment, the second receiver 1302 comprises at least one of the antenna 420 or a receiving device 418 or a multi-antenna receiving processor 472 or a receiving processor 470 or the controller/processor 475 or the memory 476 in FIG. 4 of the present application.

As one embodiment, the second receiver 1302 comprises at least the antenna 420 and the receiving device 418 in FIG. 4 of the present application.

### Embodiment 14

Embodiment 14 illustrates a schematic diagram of an artificial intelligence processing system according to another embodiment of the present application, as shown in FIG. 14. FIG. 14 comprises a first module, a second module, a third module, a fourth module, and a fifth module.

In Embodiment 14, the first module sends a first dataset to the second module, the first module sends a second dataset to the third module, the first module sends a third dataset to the fifth module, the fifth module sends a first-type parameter group to the second module, the fifth module sends a second-type parameter group to the third module, the fifth module sends a third-type parameter group to the fourth module, the second module sends a fourth-type parameter group to the fourth module, and the fourth module sends a fifth-type parameter group to the third module.

As one embodiment, the first module, the second module, the third module, the fourth module and the fifth module all belong to a first node.

The above method avoids air interface signaling interaction and shortens transmission delay.

As one embodiment, any module among the first module, the second module, the third module, the fourth module and the fifth module does not belong to the first node.

The above method reduces the hardware complexity of the first node.

As one embodiment, at least the first module among the first module, the second module, the third module, the fourth module and the fifth module belongs to the first node; and, at least one module among the first module, the second module, the third module, the fourth module, and the fifth module does not belong to the first node.

The above method balances the hardware complexity and transmission delay of the first node.

As one embodiment, the first module is used for data collection.

As one embodiment, the first module is responsible for data collection.

As one embodiment, the first module has a data collection function.

As one embodiment, the second module is used for model training.

As one embodiment, the second module is responsible for model training.

As one embodiment, the second module has a model training function.

As one embodiment, the second module executes AI/ML model training.

As one embodiment, the second module executes validation.

As one embodiment, the second module executes testing.

As one embodiment, the second module generates model performance metrics.

As one embodiment, the second module is responsible for data preparation.

As one embodiment, the data preparation comprises at least one of data pre-processing or cleaning or formatting or transformation.

As one embodiment, the third module is used for inference.

As one embodiment, the third module has an inference function.

As one embodiment, the third module is responsible for inference.

As one embodiment, the fourth module is used for model storage.

As one embodiment, the fourth module has a model storage function.

As one embodiment, the fourth module is responsible for storing trained models.

As one embodiment, the fourth module is responsible for storing trained models capable of executing inference processing.

As one embodiment, the fifth module is used for management.

As one embodiment, the fifth module is responsible for management.

As one embodiment, the fifth module has a management function.

As one embodiment, the first dataset is training data.

As one embodiment, the second dataset is inference data.

As one embodiment, the third dataset is monitoring data.

As one embodiment, the first-type parameter group comprises a monitoring output.

As one embodiment, the second-type parameter group comprises a management instruction.

As one embodiment, the second-type parameter group is used for a fine-tune operation of an inference function.

As one embodiment, the second-type parameter group comprises an identifier of a module.

As one embodiment, the second-type parameter group is used for model selection.

As one embodiment, the second-type parameter group is used for module switching.

As one embodiment, the second-type parameter group is used for activating/deactivating a model.

As one embodiment, the second-type parameter group is used for returning from AI-ML operations to non-AI-ML operations.

As one embodiment, the third-type parameter group comprises a model transfer request.

As one embodiment, the third-type parameter group comprises a model delivery request.

As one embodiment, the fourth-type parameter group comprises a trained model.

As one embodiment, the fourth-type parameter group comprises an updated model.

As one embodiment, the fourth-type parameter group indicates an identifier of a module.

As one embodiment, the fifth-type parameter group comprises model transfer.

As one embodiment, the fifth-type parameter group comprises model delivery.

As one embodiment, the fifth-type parameter group indicates an identifier of a module.

As one embodiment, a first-type output comprises a monitoring output.

As one embodiment, the first-type output exists.

As one embodiment, the first-type output does not exist.

As one embodiment, a second output comprises inference output.

As one embodiment, the second-type output is used by the fifth module to monitor the performance of an AI/ML model.

As one embodiment, the second-type output is used by the fifth module to monitor the performance of an AI/ML function.

As one embodiment, the second-type output exists.

As one embodiment, the second-type output does not exist.

As one embodiment, the artificial intelligence processing system generates or assists in generating at least part of a first message.

As one embodiment, the fifth module generates or assists in generating at least part of the first message.

As one embodiment, the third module generates or assists in generating at least part of the first message.

As one embodiment, the second-type output comprises at least part of the first message.

As one embodiment, the artificial intelligence processing system generates or assists in generating a first parameter list.

As one embodiment, the fifth module generates or assists in generating the first parameter list.

As one embodiment, the third module generates or assists in generating the first parameter list.

As one embodiment, the second-type output comprises the first parameter list.

As one embodiment, the artificial intelligence processing system generates or assists in generating a first threshold.

As one embodiment, the fifth module generates or assists in generating the first threshold.

As one embodiment, the third module generates or assists in generating the first threshold.

As one embodiment, the second-type output comprises the first threshold.

As one embodiment, the artificial intelligence processing system generates or assists in generating Q1.

As one embodiment, the fifth module generates or assists in generating Q1.

As one embodiment, the third module generates or assists in generating Q1.

As one embodiment, the second-type output comprises Q1.

As one embodiment, the first dataset comprises a measurement for an RS resource indicated by a first parameter.

As one embodiment, the first dataset comprises at least one of position information, a movement direction, or a movement speed of the first node.

As one embodiment, the second dataset comprises the measurement for the RS resource indicated by the first parameter.

As one embodiment, the second dataset comprises at least one of the position information, the movement direction, or the movement speed of the first node.

As one embodiment, the third dataset comprises the measurement for the RS resource indicated by the first parameter.

As one embodiment, the third dataset comprises at least one of the position information, the movement direction, or the movement speed of the first node.

As one embodiment, the Embodiment 14 is merely to illustrate that the present application can be used for an artificial intelligence processing system. The embodiment does not limit the application of the present application to non-artificial intelligence processing systems, and the embodiment does not limit the application of the present application to other types of artificial intelligence processing systems to achieve effects comparable to the artificial intelligence processing system shown in FIG. 14.

Those ordinary skilled in the art can understand that all or part of the steps in the above method can be completed by instructing relevant hardware through a program, and the program can be stored in a computer-readable storage medium, such as a read-only memory, a hard disk or an optical disc. Optionally, all or part of the steps in the above embodiments can also be implemented using one or more integrated circuits. Accordingly, each module element in the above embodiments can be implemented in the form of hardware or implemented in the form of a software function module. The present application is not limited to any specific form of software and hardware combination. The user equipment, the terminals and the UE in the present application include but not limited to drones, communication modules on drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC terminals, enhanced MTC (eMTC) terminals, data cards, Internet cards, vehicle-mounted communication devices, low-cost mobile phones, low-cost tablet computers, and other wireless communication devices. The base stations or system devices in the present application include but are not limited to macrocellular base stations, microcellular base stations, femtocells, relay base stations, NR Nodes B (gNBs), Transmitter Receiver Points (TRPs), and other wireless communication devices.

The above only describes preferred embodiments of the present application and is not used for limiting the scope of protection of the present application. Any modifications, equivalent substitutions, improvements and the like made within the spirit and principles of the present application shall be comprised within the scope of protection of the present application.

## Claims

1. A first node used for wireless communication, comprising:
a first receiver receiving a first message, wherein the first message comprises at least one parameter list, any parameter list among the at least one parameter list comprises a plurality of parameters, and the parameters indicate at least one RS resource;
a first processing machine determining a first parameter, wherein the first parameter is one parameter in a first parameter list, and the first parameter list is one parameter list among the at least one parameter list; and applying a spatial filter of the RS resource indicated by the first parameter to wireless transmission,
wherein a determination of the first parameter depends on at least a measurement for the RS resource indicated by the first parameter and a position of the first parameter in the first parameter list.

2. The first node according to claim 1, wherein the determination of the first parameter depends on a position of a second parameter in the first parameter list; and before the first parameter is applied, a spatial filter of the RS resource indicated by the second parameter is applied to the wireless transmission.

3. The first node according to claim 2, wherein no more than Q1 parameters are between a position of a candidate for the first parameter in the first parameter list and the position of the second parameter in the first parameter list; and the first parameter list is composed of more than Q1 parameters, and Q1 is a non-negative integer.

4. The first node according to claim 2 or 3, comprising:
the first processing machine determining the first parameter list,
wherein the at least one parameter list comprises a plurality of parameter lists, and a determination of the first parameter list depends on measurements for RS resources indicated by the plurality of parameters in the first parameter list; the plurality of parameter lists comprise the second parameter; and the first parameter list is one of the plurality of parameter lists, and the determination of the first parameter list is performed after the determination of the first parameter.

5. The first node according to any one of claims 1 to 3, comprising:
the first processing machine determining the first parameter list,
wherein the at least one parameter list comprises a plurality of parameter lists, and a determination of the first parameter list depends on measurements for RS resources indicated by the plurality of parameters in the first parameter list.

6. The first node according to any one of claims 1 to 5, wherein a measurement result for the RS resource indicated by the first parameter is better than or not worse than a first threshold, and the first threshold depends on the position of the first parameter in the first parameter list.

7. The first node according to any one of claims 1 to 6, comprising:
the first processing machine measuring at least one RS resource after determining the first parameter, and sending a second message, in response to a first condition being satisfied, the second message comprising a measurement result for the at least one RS resource,
wherein the first condition depends on the measurement result for the at least one RS resource, at least two parameters in the first parameter list indicate RS resources associated with different cell identities, and the first condition depends on the cell identities with which the RS resources indicated by a plurality of parameters in the first parameter list are associated.

8. The first node according to any one of claims 1 to 7, wherein the behavior of determining the first parameter comprises sending a third message, wherein the third message indicates the first parameter.

9. The first node according to any one of claims 1 to 8, wherein the behavior of determining the first parameter comprises receiving a fourth message, and the fourth message indicates that the first parameter is applied.

10. A second node used for wireless communication, comprising:
a second transmitter sending a first message, wherein the first message comprises at least one parameter list, any parameter list among the at least one parameter list comprises a plurality of parameters, and the parameters indicate at least one RS resource,
wherein a recipient of the first message determines a first parameter, wherein the first parameter is one parameter in a first parameter list, and the first parameter list is one parameter list among the at least one parameter list; the recipient of the first message applies a spatial filter of the RS resource indicated by the first parameter to wireless transmission; and a determination of the first parameter depends on at least a measurement for the RS resource indicated by the first parameter and a position of the first parameter in the first parameter list.

11. A method for a first node used for wireless communication, comprising:
receiving a first message, wherein the first message comprises at least one parameter list, any parameter list among the at least one parameter list comprises a plurality of parameters, and the parameters indicate at least one RS resource;
determining a first parameter, wherein the first parameter is one parameter in a first parameter list, and the first parameter list is one parameter list among the at least one parameter list; and applying a spatial filter of the RS resource indicated by the first parameter to wireless transmission,
wherein a determination of the first parameter depends on at least a measurement for the RS resource indicated by the first parameter and a position of the first parameter in the first parameter list.

12. A method for a second node used for wireless communication, comprising:
sending a first message, wherein the first message comprises at least one parameter list, any parameter list among the at least one parameter list comprises a plurality of parameters, and the parameters indicate at least one RS resource,
wherein a recipient of the first message determines a first parameter, wherein the first parameter is one parameter in a first parameter list, and the first parameter list is one parameter list among the at least one parameter list; the recipient of the first message applies a spatial filter of the RS resource indicated by the first parameter to wireless transmission; and a determination of the first parameter depends on at least a measurement for the RS resource indicated by the first parameter and a position of the first parameter in the first parameter list.
